(19) Europäisches Patentamt
European Patent Office
Office européen des brevets

(11) **EP 2 287 959 A1**

(12) **EUROPEAN PATENT APPLICATION**
published in accordance with Art. 153(4) EPC

(43) Date of publication:
**23.02.2011 Bulletin 2011/08**

(51) Int Cl.:
**H01M 14/00** (2006.01)   **H01L 31/04** (2006.01)

(21) Application number: **09754407.6**

(22) Date of filing: **22.05.2009**

(86) International application number:
**PCT/JP2009/002260**

(87) International publication number:
**WO 2009/144898 (03.12.2009 Gazette 2009/49)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **27.05.2008 JP 2008137879**
**27.05.2008 JP 2008138065**

(71) Applicant: **Fujikura, Ltd.**
**Tokyo 135-8512 (JP)**

(72) Inventors:
• **OKADA, Kenichi**
**Sakura-shi**
**Chiba 285-8550 (JP)**
• **KITAMURA, Takayuki**
**Sakura-shi**
**Chiba 285-8550 (JP)**

(74) Representative: **HOFFMANN EITLE**
**Patent- und Rechtsanwälte**
**Arabellastraße 4**
**81925 München (DE)**

(54) **PHOTOELECTRIC CONVERSION ELEMENT**

(57)   The present invention provides a photoelectric conversion element in which current collection is conveniently performed without degrading a photoelectric conversion characteristic. The photoelectric conversion element in accordance with the present invention has: a structural body composed of at least a conductive first electrode provided with a porous oxide semiconductor layer supporting a sensitizing dye, a second electrode provided opposite the first electrode, and an electrolyte provided in at least part of the space between the first electrode and the second electrode; a cover member that covers the structural body and forms a separation portion between the cover member and the second electrode, and a conductive member provided in the separation portion, and having a connection site that is electrically connected to either the first electrode or the second electrode. Moreover, the conductive member is sandwiched between the cover member and the first electrode or the second electrode.

FIG. 1

**Description**

TECHNICAL FIELD

The present invention relates to a photoelectric conversion element, and more particularly to a photoelectric conversion element in which current collection can be conveniently performed without degrading the photoelectric conversion characteristic.

BACKGROUND FIELD

Against the background of recent environmental problems and problems associated with natural resources, solar cells are expected as a source of clean energy. Among solar cells, the dye-sensitized solar cells (can be referred to hereinbelow as DSC) suggested by a Grätzel's group (Switzerland) have attracted attention as photoelectric conversion elements that makes it possible to obtain a high conversion efficiency at a low cost.

A typical dye-sensitized solar cell uses conductive glass for both the first electrode and the second electrode. In such a case, a thin transparent conductive film is usually formed on the glass surface that is an insulator and therefore electric conductivity is imparted only to the surface on the inside of the cell. Therefore, the substrates should be disposed far apart from each other to collect the power generated inside each cell.

Patent Document 1 discloses a method using a conductive substrate (metal foil) for the second electrode. As a result, current collection can be performed directly from the rear surface of the second electrode, and it is not necessary to dispose the substrates far apart from each other. Therefore, such a configuration is useful when a plurality of cells are formed on one substrate (modularization) or the cell contour (the surrounding portions that do not generate power, such as terminals) are decreased in size. As a typical method for collecting current from such a second electrode composed of a metal foil, wirings are connected by soldering and current collection is performed by using the wirings.

However, in the method disclosed in Patent Document 1, since the wirings should be connected to the substrate by soldering, the soldering heat is transferred to a dye-sensitized titanium oxide electrode that has low heat resistance and a photoelectric conversion characteristic can be degraded.

BACKGROUND ART DOCUMENT

PATENT DOCUMENT

Patent Document 1: Japanese Patent Application Publication No. 2005-346971

SUMMARY OF THE INVENTION

PROBLEM TO BE SOLVED BY THE INVENTION

With the foregoing in view, it is an object of the present invention to provide a photoelectric conversion element in which current collection can be conveniently performed without degrading a photoelectric conversion characteristic.

MEANS FOR SOLVING THE PROBLEMS

The present invention provides a photoelectric conversion element including: a structural body composed of at least a conductive first electrode provided with a porous oxide semiconductor layer supporting a sensitizing dye, a second electrode provided opposite the first electrode, and an electrolyte provided in at least part of a space between the first electrode and the second electrode; a cover member that covers the structural body and forms a separation portion between the cover member and the second electrode; and a conductive member provided in the separation portion and having a connection site that is electrically connected to either the first electrode or the second electrode, and the conductive member is sandwiched between the cover member and the first electrode or the second electrode.

With the photoelectric conversion element in accordance with the present invention, since the conductive member is sandwiched between the cover member and the first electrode or the second electrode, the conductive member is fixed, without soldering, in a predetermined position on the first electrode or second electrode. Further, the first electrode or the second electrode and the conductive member are electrically connected. As a result, when the electricity generated by the structural body is taken out, current collection can be conveniently performed from the conductive member. In addition, since it is not necessary to solder the conductive member to the structural body, the porous oxide semiconductor layer can be prevented from degradation caused by the heat generated by soldering, and the degradation of the photoelectric conversion characteristic can be inhibited. Thus, with the photoelectric conversion element in accordance with the present invention, current collection can be conveniently performed without degrading the photoelectric conversion characteristic.

The photoelectric conversion element may have a plurality of the structural bodies, wherein the conductive member may connect electrically a first electrode of one structural body from among two mutually adjacent structural bodies to a second electrode of the other structural body, and the conductive member may be sandwiched between the cover member and the first electrode of one of the structural bodies and sandwiched between the cover member and the second electrode of the other one of the structural bodies.

It is preferred that the photoelectric conversion element further include a wiring portion provided at the cover member and electrically connected to the first electrode or the second electrode, wherein the conductive member is in contact with the wiring portion and has a first connection site composed of the connection site electrically connected to the first electrode or the second electrode and a second connection site that is in contact with the wiring portion and has a convex shape.

In this case, since the second connection site of the conductive member is in contact with the wiring portion and has a convex shape, the second connection site can bite into the wiring portion and the conductive member can be strongly fixed to the wiring portion. Therefore, sufficient conduction between the wiring portion and the conductive member can be ensured and the occurrence of poor conduction can be sufficiently prevented. With the wiring portion being provided in the cover member, conduction with the outside can be established more easily than in a case where the wiring portion is not provided.

In the photoelectric conversion element, it is preferred that the connection site have a protruding shape.

Where the connection site has a protruding shape, the connection site bites into the first electrode or second electrode and therefore the conductive member is strongly fixed to the first electrode or second electrode. Further, even when a passivation layer such as an oxide film is formed on the surface of the first electrode or second electrode, the connection site can easily break through the passivation layer and can easily come into contact with the first electrode or second electrode.

In the photoelectric conversion element, for example, at least a portion of the conductive member and the wiring portion is provided inside the separation portion.

In the photoelectric conversion element, the wiring portion is a first printed wiring portion provided at the inner surface of the cover member on the separation portion side, and a first terminal that is electrically connected at one end to the first printed wiring portion through the cover member and exposed at the other end to the outside of the cover member is provided at the cover member.

In this case, since the first terminal is exposed to the outside of the cover member, conduction to the outside can be ensured more conveniently.

It is preferred that in the photoelectric conversion element the wiring portion be a second printed wiring portion provided in a region from the inner surface of the cover member on the separation portion side to the outer surface of the cover member along these surfaces, and a second terminal electrically connected to the second printed wiring portion be provided at the outer surface side of the cover member.

In this case, since the second terminal is provided on the outer surface side of the cover member, conduction to the outside can be ensured more conveniently.

It is preferred that in the photoelectric conversion element the wiring portion be a conductor portion of a first flexible printed circuit board provided in a region from the inner surface of the cover member on the separation portion side to the outer surface of the cover member along these surfaces, and a third terminal electrically connected to the conductor portion of the first flexible printed circuit board be provided at the outer surface side of the cover member.

In this case, since the third terminal is provided on the outer surface side of the cover member, conduction to the outside can be ensured more conveniently. Further, it is usually difficult to provide a wiring portion on the cover member, which is a three-dimensional article, by using a printing method, but the first flexible printed circuit board already has the conductor portion. Therefore, the wiring portion can be easier disposed on the cover member by using the conductor portion of the first flexible printed circuit board as the wiring portion than by providing the second printed wiring portion as the wiring portion.

Further, it is preferred that in the photoelectric conversion element a second flexible printed circuit board be provided inside the separation portion so as to cover the conductive member and seal a space between the flexible printed circuit board and the structural body, and the wiring portion be a conductor portion of the second flexible printed circuit board.

In this case, since the space between the second flexible printed circuit board and the structural body is sealed, the penetration of moisture can be prevented more reliably that in the case in which this space is not sealed.

In this case, it is preferred that a third terminal that passes through the cover member and has one end thereof located close to the inside of the separation portion and the other end exposed to the outside be provided in the cover member, and the conductor portion of the second flexible printed circuit board and the third terminal be electrically connected.

In this case, the passage path of the electrical current can be shortened and therefore the take-out resistance can be reduced by comparison with the case in which the third terminal does not pass through the cover member.

Alternatively, a through hole through which the separation portion communicates with the outside may be provided in the cover member, and a portion of the second flexible printed circuit board may be led to the outside via the through hole.

The conductor portion of the second flexible printed circuit board is usually disposed between insulating films. Therefore, in a photoelectric conversion element in which the second flexible printed circuit board is not led out to the outside via a through hole of the cover member, a through hole should be formed in the insulating film to expose the conductor portion. Thus, it is necessary to conduct processing of the second flexible printed circuit board. By contrast, where a portion of the second flexible printed circuit board is led out to the outside through the through hole of the cover member, the conductor portion of the second flexible printed circuit board is directly led out through the through hole of the cover member. Therefore, no processing of the second flexible printed circuit board is required. As a result, cost of the photoelectric conversion element can be reduced.

It is preferred that the conductive member in the photoelectric conversion element could be elastically deformed and be disposed in a compressed state between the cover member and the first electrode or the second electrode.

In this case, the conductive member can be mechanically brought into contact with the first electrode or second electrode by an appropriate pressurizing force. In addition, even when the distance between the cover member and the first electrode or second electrode changes due to variations in the external air temperature, the conductive member can deform to accommodate this change. Therefore, conduction between the cover member and the first electrode or second electrode can be ensured at all times and insufficient conduction caused by changes in air temperature can be prevented.

A configuration of the photoelectric conversion element in which the connection site of the conductive member has a protruding shape is effective when the first electrode or the second electrode is constituted by a metal that can form a passivation layer on the surface thereof. When a passivation layer is formed on the first electrode or second electrode, the take-out resistance of the first electrode or second electrode increases. With the photoelectric conversion element in which the connection site of the conductive member has a protruding shape, the passivation layer can be also pierced by the connection site, thereby enabling electric connection with the first electrode or second electrode.

In this case, the metal includes, for example, titanium.

It is also preferred that a drying means be provided inside the separation portion.

In this case, even if moisture penetrates into the separation portion, the drying means can maintain the separation portion in a dry state by absorbing the moisture and good electric connection can be maintained between the second electrode and the conductive member or between the first electrode and the conduction member.

EFFECTS OF THE INVENTION

With the photoelectric conversion element in accordance with the present invention, current collection can be conveniently performed from the conductive member when the electricity generated by the structural body is taken out. Further, since it is not necessary to solder the conductive member to the structural body, the porous semiconductor layer can be prevented from degradation caused by the heat generated by soldering. Therefore, it is possible to obtain photoelectric conversion element in which current collection can be conveniently performed without degrading the photoelectric conversion characteristic.

BRIEF DESCRIPTION OF THE DRAWINGS

FIG. 1 is a cross-sectional view illustrating schematically a photoelectric conversion element according to the first embodiment of the present invention.

FIG. 2 is a perspective view illustrating schematically a conductive member for use in the photoelectric conversion element according to the first embodiment of the present invention.

FIG. 3 is a cross-sectional view illustrating the conductive member shown in FIG. 2.

FIG. 4 is a perspective view illustrating schematically another example of the conductive member provided in the photoelectric conversion element according to the first embodiment of the present invention.

FIG. 5 is a perspective view illustrating schematically yet another example of the conductive member provided in the photoelectric conversion element according to the first embodiment of the present invention.

FIG. 6 is a side view illustrating schematically another example of the conductive member provided in the photoelectric conversion element according to the first embodiment of the present invention.

FIG. 7 is a cross-sectional view illustrating schematically a photoelectric conversion element according to the second embodiment of the present invention.

FIG. 8 is a cross-sectional view illustrating schematically a photoelectric conversion element according to the third embodiment of the present invention.

FIG. 9 is a perspective view illustrating schematically an example of the conductive member provided in the photoelectric conversion element according to the third embodiment of the present invention.

FIG. 10 is a cross-sectional view illustrating the conductive member shown in FIG. 9.

FIG. 11 is a perspective view illustrating schematically another example of the conductive member provided in the photoelectric conversion element according to the third embodiment of the present invention.

FIG. 12 is a perspective view illustrating schematically yet another example of the conductive member provided in the photoelectric conversion element according to the third embodiment of the present invention.

FIG. 13 is a side view illustrating schematically another example of the conductive member provided in the photoelectric conversion element according to the third embodiment of the present invention.

FIG. 14 is a cross-sectional view illustrating schematically another example of the photoelectric conversion element according to the third embodiment of the present invention.

FIG. 15 is a cross-sectional view illustrating schematically a photoelectric conversion element according to the fourth embodiment of the present invention.

FIG. 16 is a cross-sectional view illustrating schematically a photoelectric conversion element according to the fifth embodiment of the present invention.

FIG. 17 is a cross-sectional view illustrating schematically a photoelectric conversion element according to the sixth embodiment of the present invention.

FIG. 18 is a cross-sectional view illustrating schematically a photoelectric conversion element according to the seventh embodiment of the present invention.

FIG. 19 is a perspective view illustrating schematically another example of the first electrode in the photoelectric conversion element according to the seventh embodiment of the present invention.

FIG. 20 is a cross-sectional view illustrating schematically a photoelectric conversion element according to the eighth embodiment of the present invention.

FIG. 21 is a cross-sectional view illustrating schematically a photoelectric conversion element according to the ninth embodiment of the present invention.

FIG. 22 is a perspective view illustrating schematically a conductive member for use in the photoelectric conversion element according to the ninth embodiment of the present invention.

FIG. 23 is a cross-sectional view illustrating the conductive member shown in FIG. 22.

FIG. 24 is a cross-sectional view illustrating schematically a photoelectric conversion element according to the tenth embodiment of the present invention.

FIG. 25 is a cross-sectional view illustrating schematically a photoelectric conversion element according to the eleventh embodiment of the present invention.

FIG. 26 is a cross-sectional view illustrating schematically a photoelectric conversion element according to the twelfth embodiment of the present invention.

FIG. 27 is a cross-sectional view illustrating schematically a photoelectric conversion element according to the thirteenth embodiment of the present invention.

FIG. 28 is a view illustrating schematically one surface side of a flexible printed circuit board.

FIG. 29 is a view illustrating schematically another surface side of a flexible printed circuit board.

FIG. 30 is a cross-sectional view illustrating schematically a photoelectric conversion element according to the fourteenth embodiment of the present invention.

FIG. 31 is a cross-sectional view illustrating schematically a photoelectric conversion element according to the fifteenth embodiment of the present invention.

FIG. 32 is a cross-sectional view illustrating schematically a photoelectric conversion element according to the sixteenth embodiment of the present invention.

FIG. 33 is a perspective view illustrating another example of the conductive member for use in the photoelectric conversion element according to the third embodiment of the present invention.

FIG. 34 is a perspective view illustrating another example of the conductive member for use in the photoelectric conversion element according to the third embodiment of the present invention.

FIG. 35 is a perspective view illustrating another example of the conductive member for use in the photoelectric conversion element according to the third embodiment of the present invention.

FIG. 36 is a cross-sectional view illustrating another example of the conductive member for use in the photoelectric conversion element according to the third embodiment of the present invention.

FIG. 37 is a perspective view illustrating another example of the conductive member for use in the photoelectric conversion element according to the third embodiment of the present invention.

FIG. 38 is a perspective view illustrating an example of shape of the first connection site or second connection site of the conductive members for use in the photoelectric conversion elements according to the third, fourth, and sixth to sixteenth embodiments of the present invention.

FIG. 39 is a perspective view illustrating another example of shape of the first connection site or second connection site of the conductive members for use in the photoelectric conversion elements according to the third, fourth, and sixth to sixteenth embodiments of the present invention.

FIG. 40 is a perspective view illustrating yet another example of shape of the first connection site or second connection site of the conductive members for use in the photoelectric conversion elements according to the third, fourth, and sixth to sixteenth embodiments of the present invention.

FIG. 41 is a partial cross-sectional view illustrating schematically a photoelectric conversion element according to the third embodiment of the present invention in which the cover member is made of resin and which is in a state after the separation portion has been evacuated.

## MODE FOR CARRYING OUT THE INVENTION

Embodiments of the present invention will be described below in detail with reference to the appended drawings, but the present invention is not limited to these embodiments and can be changed in a variety of ways, without departing from the scope and essence thereof.

First Embodiment

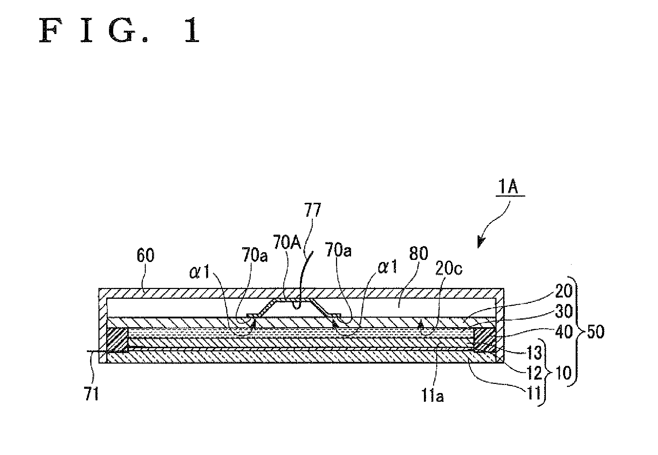

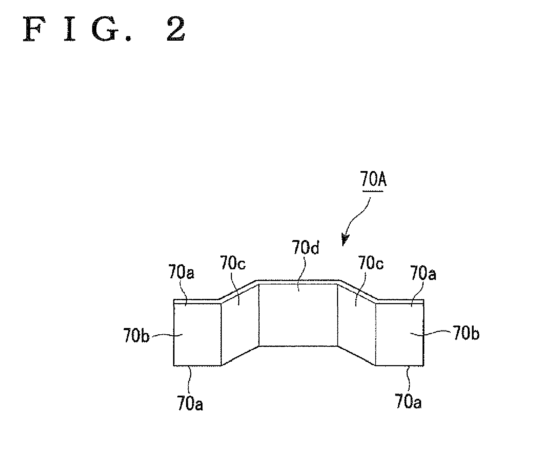

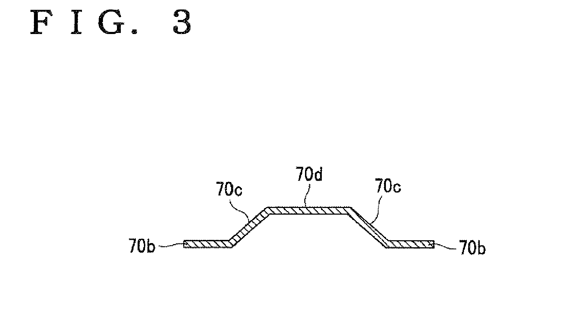

FIG. 1 is a cross-sectional view of a photoelectric conversion element 1A of the first embodiment of the present invention. FIG. 2 is a perspective view of a conductive member 70A provided in the present embodiment. FIG. 3 is a cross-sectional view of the conductive member 70A shown in FIG. 2.

The photoelectric conversion element 1A of the present embodiment includes a structural body 50 composed of at least a conductive first electrode 10 provided with a porous oxide semiconductor layer 13 supporting a sensitizing dye, a second electrode 20 provided opposite the first electrode 10, and an electrolyte 30 provided in at least part of a space between the first electrode 10 and the second electrode 20, a cover member 60 that covers the structural body 50 and forms a separation portion 80 between the cover member and the second electrode 20, and a conductive member 70A in the separation portion 80, the conductive member having a connection site 70a electrically connected to the second electrode 20.

Each of the aforementioned components will be described below in greater detail.

The first electrode 10 is a conductive substrate provided with a porous oxide semiconductor layer 13 and is, for example, a transparent electrode composed of a first base material 11, a transparent conductive film 12 provided on one surface 11a of the first base material 11, and the porous oxide semiconductor layer 13 provided on the one surface 11a of the first base material 11, with a transparent conductive film 12 being interposed therebetween.

A wiring 71 that is used to take the power to the outside of the photoelectric conversion element 1A is electrically connected to the first electrode 10. The wiring 71 is not particularly limited and any conventional wiring can be used. The wiring 71 is led out to the outside of the photoelectric conversion element 1A via a through hole (not shown in the figure) provided in the cover member 60. In this case, the through hole used to lead out the wiring 71 is sealed with a resin or the like.

A substrate composed of a light-transmissive material is used as the first base material 11. For example, any material that is usually used as a transparent substrate for a solar cell, such as glass, polyethylene terephthalate, polyethylene naphthalate, polycarbonate, and polyethersulfones, can be used.

A material with as excellent light transmissivity as possible is preferred as the first base material 11, and a substrate with a transmissivity of equal to or higher than 85% is even more preferred.

The porous oxide semiconductor layer 13 is not particularly limited and any material that is usually used to form a porous semiconductor of a photoelectric conversion element can be used. Examples of suitable semiconductors include $TiO_2$, $SnO_2$, $WO_3$, ZnO, $Nb_2O_5$, $In_2O_3$, $ZrO_2$, $Y_2O_3$, and $Al_2O_3$.

A sensitizing dye is supported on the porous oxide semiconductor layer 13, examples thereof including ruthenium complexes, iron complexes, metal complexes of a porphyrin system or phthalocyanine system and organic dyes such as eosin, rhodamine, merocyanine, and coumarin. The sensitizing dye can be appropriately selected for use correspondingly to the application or material of the porous oxide semiconductor layer 13.

The transparent conductive film 12 is a thin film provided on the one surface 11a of the first base material 11 to impart electric conductivity to the first electrode 10. The transparent conductive film 12 is preferably a thin film composed of a conductive metal oxide, so as to obtain a structure in which the transparency of the fist electrode 10 is not significantly degraded.

Examples of conductive metal oxides forming the transparent conductive film 12 include tin-added indium oxide (ITO), fluorine-added tin oxide (FTO), tin oxide ($SnO_2$), and zinc oxide (ZnO). The transparent conductive film 12 has a film composed of the aforementioned conductive oxide. The transparent conductive film 12 may be configured of a single layer of such a film or may be configured of a laminated body.

It is preferred that the transparent conductive film 12 be a single-layer film composed only of FTO or a laminated film obtained by laminating a film composed of FTO on a film composed of ITO. In this case, it is possible to configure the first electrode 10 that excels in chemical resistance and heat resistance, demonstrates small light absorption in a visible range, and has high electric conductivity.

The second electrode 20 can be configured of a variety of metal substrates with a passive surface, preferably a titanium plate. Further, if necessary, the second electrode 20 can have a catalyst film (not shown in the figure) composed of a metal such as Pt, C, or polyethylene dioxythiophene (PEDOT) on the surface facing the first electrode 10. In this case, it is preferred that the catalyst film be configured of a metal such as Pt.

The electrolyte 30 is obtained by disposing an electrolytic solution between the first electrode 10 and the second electrode 20 and impregnating the porous oxide semiconductor layer 13 with the electrolytic solution and then gelling (pseudo-solidifying) the electrolytic solution by using an appropriate gelling agent to integrate the electrolyte with the first electrode 10 and the second electrode 20. Alternatively, a gelled electrolyte including oxide semiconductor particles or conductive particles can be used.

An organic solvent including redox species or an ionic liquid can be used as the electrolytic solution. An electrolyte obtained by introducing an appropriate gelling agent (a high-molecular gelling agent, a low-molecular gelling agent, various nanoparticles, carbon nanotubes, and the like) into such an electrolytic solution to decrease flowability may be also used.

The organic solvent is not particularly limited and organic solvents such as acetonitrile, methoxyacetonitrile, propionitrile, propylene carbonate, ethylene carbonate, diethyl carbonate, and γ-butyrolactone can be used. Ionic liquids composed of cations having a quaternized nitrogen atom such as imidazolium cations, pyrrolidonium cations, and pyridinium cations and iodide ions, bistrifluoromethane sulfonylimide anions, dicyanoamide anions, and thiocyanic acid anions can be selected as the ionic liquid.

Redox species are not particularly limited and those formed by adding iodine/iodide ions and bromine/bromide ions can be selected. For example, in the former case, the redox species can be provided by adding a iodide salt (lithium salt, derivatives of quaternary imidazolium salt, and tetraalkylammonium salts can be used individually or in combinations thereof) and iodine individually or in combinations thereof. If necessary, various additives such as 4-tert-butylpyridine, N-methylbenzimidazole, and guanidinium salt derivatives can be added to the electrolytic solution.

The sealing resin 40 is used to bond together the first electrode 10 and the second electrode 20 disposed opposite each other and to seal the electrolyte 30 between the first electrode 10 and the second electrode 20. The sealing resin 40 is not particularly limited, provided it has excellent adhesiveness with respect to the first electrode 10 and the second electrode 20, but an adhesive composed of a thermoplastic resin having a carboxylic acid group in a molecular chain or a UV-curable resin are preferred. Specific examples of suitable resins include Himilan (Du Pont-Mitsui Polychemicals Co., Ltd.) and Bynel (Du Pont Co.).

The structural body 50 is a dye-sensitized solar cell composed at least of the fist electrode 10, the second electrode 20, the electrolyte 30 disposed between the first electrode 10 and the second electrode 20, and the sealing resin 40 that bonds the first electrode 10 and the second electrode 20 together and seals the electrolyte 30. The structural body 50 may be a cell or a module.

The cover member 60 covers the structural body 50 and may cover the entire structural body 50 or may cover the structural body 50 so that the second electrode 20 is covered and the first electrode 10 is exposed. In this case, for example, the separation portion 80 can be sealed by providing the cover member 60 at the structural body 50, with a gasket (not shown in the figure) being interposed therebetween. By providing the cover member 60, it is possible to prevent moisture or the like from penetrating into the structural body 50. In particular, when the cover member 60 covers the entire structural body 50, at least a portion of the cover member on the first electrode 10 side has light transmissivity. A resin, glass, or a metal plate can be used as the cover member 60, and the cover member 60 can be appropriately selected for use correspondingly to the shape required to cover the structural body 50. When the structural body 50 is covered so that the first electrode 10 is exposed, for example, aluminum, which is a lightweight metal that is easy to process and excels in corrosion resistance, can be used as a material constituting the cover member 60. When a resin is used as the cover member 60, the resin can be provided with a gas barrier film (not shown in the figure) such as a vapor-deposited aluminum film, alumina film, silica film, and polyvinyl alcohol film to increase sealing ability. As a result, formation of a passivation layer on a contact portion α1, which is a contact portion of the conductive member 70A and the structural body 50, can be inhibited and good electric connection can be ensured.

The conductive member 70A is located in the separation portion 80. A connection site 70a of the conductive member 70A forms the contact portion α1 together with the second electrode 20, and is electrically connected thereto. The conductive member 70A is preferably provided to be electrically connected to a central portion of one surface 20c of the second electrode 20. As a result, an electric current can be collected from the center of the one surface 20c of the second electrode 20 that has a high current collection efficiency.

A material with good electric conductivity is preferably used to constitute the conductive member 70A. Examples of such a material include copper or an alloy including copper. For example, beryllium copper having a high tensile strength and elasticity and excelling in strength and electric conductivity can be used as the alloy including copper.

In this configuration, the conductive member 70A is sandwiched by the cover member 60 and the second electrode 20.

As shown in FIG. 2 and FIG. 3, the conductive member 70A has a flat top surface 70d, inclined first surfaces 70c, and second surfaces 70b parallel to the top surface. The top surface 70d is a plate-like cover member contact portion that will be in contact with the cover member 60. The second surfaces 70b are plate-like end portions parallel to the cover member contact portion. The first surfaces 70c are plate-like connection portions that connect the cover member contact portion with the end portions. The first surfaces 70c are inclined with respect to the cover member contact portion and end portions. By forming the conductive member 70A to have a plurality of surfaces, it is possible to provide for suitable elasticity and enable elastic deformation of the conductive member. In the conductive member 70A of the present embodiment, surfaces 70a of the second surfaces 70b, which are connection sites facing the second electrode 20, form contact portions $\alpha$1 that are electrically connected to and in a surface contact with the second electrode 20. In this case, where the contact force of the conductive member 70A with the second electrode 20 is weak, the contact portions $\alpha$1 of the conductive member 70A and the second electrode 20 can be displaced, conduction defects can occur, and current collection efficiency can be decreased. Conversely, where the contact force of the conductive member 70A with the second electrode 20 is strong, the second electrode 20 can be damaged. For this reason, it is preferred that the conductive member 70A could be elastically deformed and be disposed in a state of compression by the cover member 60 and the second electrode 20. As a result, the conductive member 70A can be mechanically brought into contact with the second electrode 20 by an appropriate pressurizing force. Therefore, current collection from the second electrode 20 can be performed with good stability, without damaging the second electrode 20.

In addition, even when the distance between the cover member 60 and the second electrode 20 changes due to variations in the external air temperature, the conductive member 70A can deform to accommodate this change. Therefore, conduction between the cover member 60 and the second electrode 20 can be ensured at all times and insufficient conduction caused by changes in air temperature can be prevented. The elastic constant of the conductive member 70A is usually 2-50 N/mm, preferably 5-20 N/mm.

The top surface 70d of the conductive member 70A is a site that will be in contact with the cover member 60 and may be fixed to the cover member 60, for example, with a two-side adhesive tape.

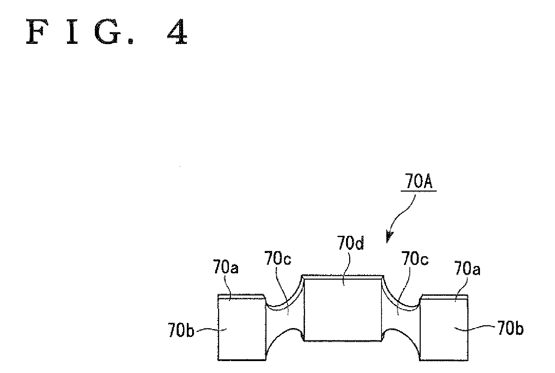

The first surfaces 70c and the second surfaces 70b can provide for elasticity matching the size of the separation portion 80 or the structural body 50 that will be used, by appropriately adjusting the shape of the first and second surfaces by changing the inclination angle, length, thickness,

or width thereof. For example, as shown in FIG. 4, the elasticity of the conductive member 70 can be appropriately adjusted by providing the first surface 70c with necking portions.

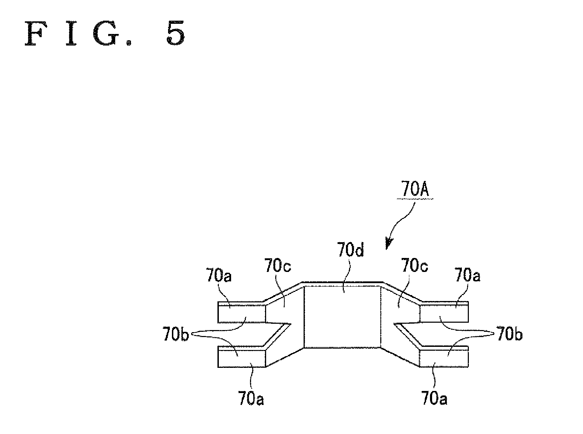

In the configuration shown in FIGS. 2 and 3, one second surface 70b is provided with respect to one first surface 70c, but such a shape of the conductive member 70A is not limiting and, for example, as shown in FIG. 5, the first surfaces 70c can be branched from the intermediate portion thereof and a plurality of second surfaces 70b may be provided with respect to one first surface 70c in the conductive member 70A. With such a configuration, even if an obstacle appears in one surface 70a, which is in contact with the second electrode 20 in the conductive member 70A, the other surface 70a serves as a backup.

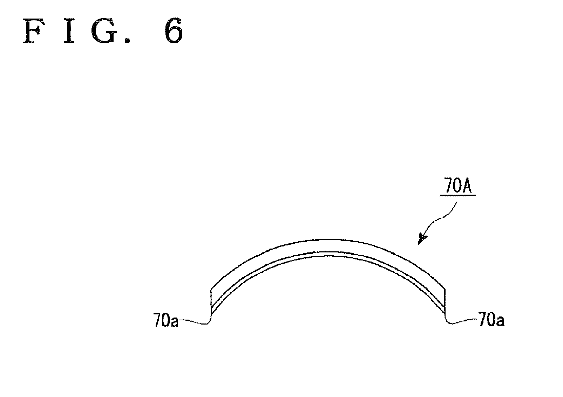

Part of the conductive member 70A may be elastically deformed as in the present embodiment, or for example, as shown in FIG. 6, the conductive member 70A having a curved shape, that is, the arch-shaped the conductive member 70A can be used and thus the entire conductive member 70 can be elastically deformed.

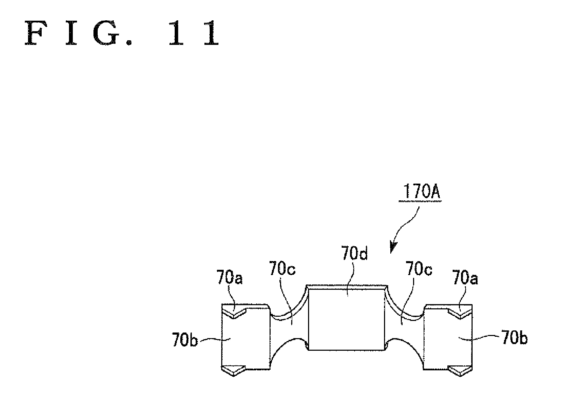

Power collected by the conductive member 70 can be taken to the outside of the photoelectric conversion element 1 by a well-known conventional method. For example, as shown in FIG. 11, the power can be taken to the outside of the photoelectric conversion element 1 by connecting a wiring 77 to the conductive member 70 by soldering or the like and leading the wiring 77 to the outside via a through hole (not shown in the figure) provided in the cover member 60. The wiring 77 is not particularly limited and a well-known conventional wiring can be used. The through hole used when leading the wiring 77 to the outside of the photoelectric conversion element 1 is sealed with a resin or the like.

The separation portion 80 is a space formed between the second electrode 20 and the cover member 60 and is preferably in a sealed and dried state. As a result, good electric connection of the conductive member 70A and the second electrode 20 can be maintained. In particular, where a dew point of the separation portion 80 is equal to or less than -40°C, condensation is prevented even at a low-temperature guaranteed limit of the photoelectric conversion element 1A and the photoelectric conversion element 1A with excellent resistance to environment can be obtained.

In the photoelectric conversion element 1A according to the first embodiment, the conductive member 70A is sandwiched between the cover member 60 and the second electrode 20. Therefore, the conductive member 70A is fixed, without soldering, in a predetermined position on the second electrode 20. Further, the conductive member 70A is electrically connected by contact to the second electrode 20. For this reason, when the electricity generated by the structural body 50 is taken out, the current can be conveniently collected from the conductive member 70A. Further, when the current is collected from the second electrode 20, since it is not necessary to connect the wiring or the like to the second electrode 20 by soldering, the second electrode 20 and structural body 50 (in particular, the porous oxide semiconductor layer 13) can be prevented from being damaged or degraded by the heat generated during soldering, and the degradation of photoelectric conversion characteristic can be prevented. Accordingly, with the photoelectric conversion element 1A, current collection can be conveniently performed without degrading the photoelectric conversion characteristic.

When the separation portion 80 is maintained in a sealed and dried state by providing the cover member 60, good electric connection of the conductive member 70A and the second electrode 20 can be obtained.

Second Embodiment

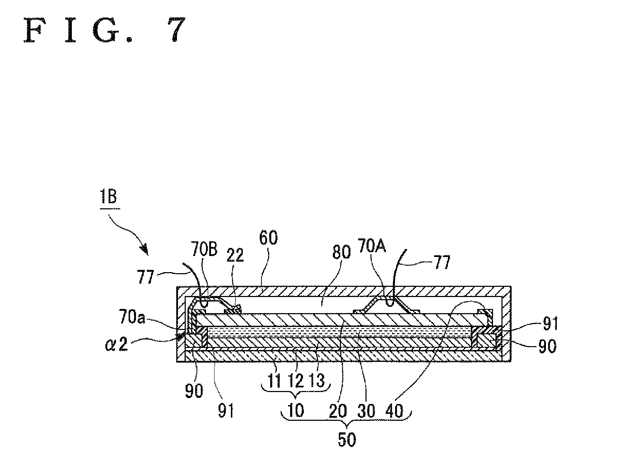

FIG. 7 is a cross-sectional view showing schematically a photoelectric conversion element 1B of the second embodiment of the present invention. In the present embodiment, components similar to those of the photoelectric conversion element 1A of the first embodiment are assigned with same reference numerals and explanation thereof is herein omitted.

The photoelectric conversion element 1B according to the second embodiment differs from the photoelectric conversion element 1A of the first embodiment in that a wiring 90 is disposed on the first electrode 10, a conductive member 70B is further provided, and the conductive member 70B is electrically connected to the first electrode 10 via the wiring 90. A wiring 77 that takes out the power collected in the same manner as in the first embodiment to the outside of the photoelectric conversion element 1 is electrically connected to the conductive member 70B.

The wiring 90 is a current-collecting wiring provided so as to surround the porous oxide semiconductor layer 13 on the surface of the first electrode 10 and is electrically connected to the first electrode 10. The wiring 90 can be formed, for example, from silver, gold, platinum, aluminum, nickel, and titanium. The width of the wiring is preferably 300 $\mu$m to 1 cm in order to prevent light transmissivity of the first electrode 10 from being significantly decreased. It is even more preferred that the wiring width be as small as 500 $\mu$m or less. The thickness of the wiring 90 is for example, 0.1-50 $\mu$m. Any material causing passivation cannot be necessarily used to form the wiring 90.

It is preferred that a protective layer 91 composed for example of glass with a low melting point be provided on the surface of the wiring 90 to protect the wiring 90 from corrosion induced by the electrolytic solution.

In the present embodiment, the conductive member 70B is in contact with the wiring 90 formed on the first electrode 10, forms a contact portion $\alpha$2, and is electrically connected to the first electrode 10. In the present embodiment, the surface area of the wiring 90 (or the first electrode 10) that is exposed to the separation portion 80 is much smaller than the surface area of the second electrode 20. Therefore, only one end of the conductive member 70B is in contact with the wiring 90 (or the first electrode 10) and the other end is in contact with an insulating film 22 provided on the second electrode 20, as shown in FIG. 7, by contrast with the configuration according to the first embodiment in which both ends of the conductive member 70B are in contact with the second electrode 20. In this case, the other end of the conductive member 70B is disposed so as to be separated from the second electrode 20 by the insulating film 22. Further, the conductive member 70B has a shape such that one second surface 70b from among the two second surfaces 70b in the conductive member 70A is perpendicular to the top surface 70d.

It is preferred that the conductive member 70B be elastically deformable and disposed in a state of compression by the cover member 60 and the first electrode 10, similarly to the conductive member 70A.

The material of the insulating film 22 is not particularly limited and, for example, PET, PEN, and paper can be used. The thickness of the insulating film is preferably 25 $\mu$m to 200 $\mu$m.

In the photoelectric conversion element 1B of the second embodiment, the conductive member 70B is sandwiched by the cover member 60 and the first electrode 10, and both ends of the conductive member are fixed to the second electrode 20 and the first electrode 10, respectively. Further, the conductive member 70B is electrically connected by the wiring 90 to the first electrode 10. Therefore, when electric current is collected from the first electrode 10, since it is not necessary to connect the wiring or the like to the first electrode 10 by soldering, current collection can be performed without damaging the first electrode 10 or the structural body 50 by the heat generated by soldering. Further, since the conductive member 70B is electrically connected by contact to the first electrode 10, current collection can be conveniently performed from the first electrode 10. In addition, when the cover member 60 is provided and the separation portion 80 is maintained in a sealed and dried state, good electric connection of the conductive member 70B and the first electrode 10 can be obtained.

In the photoelectric conversion element 1B of the second embodiment, when current is collected from the second electrode 20, the conductive member 70A is used separately, as shown in FIG. 7, to collect current from the second electrode 20 in the same manner as in the first embodiment. As a result, the yield can be increased without damaging the first electrode 10, the second electrode 20, and the structural body 50 and the current can be conveniently collected from the first electrode 10 and the second electrode 20.

In the present embodiment, the first electrode 10 and the conductive member 70B are electrically connected by the wiring 90, but the first electrode 10 and the conductive member 70B can be also electrically connected directly, that is, without the wiring 90.

Third Embodiment

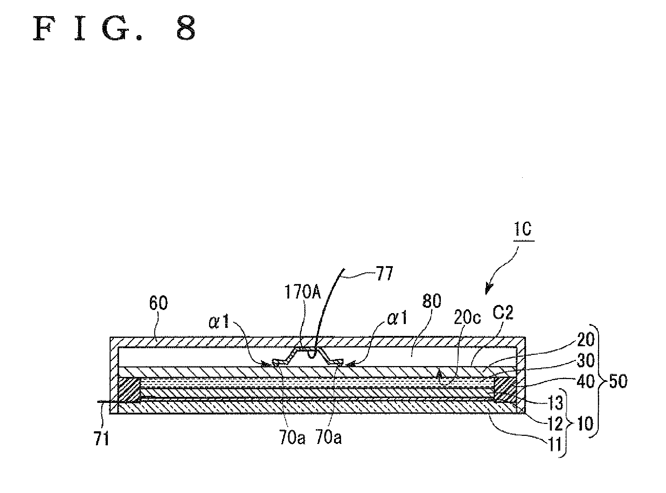

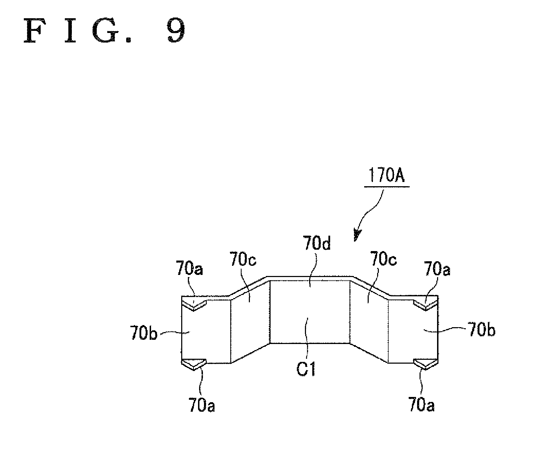

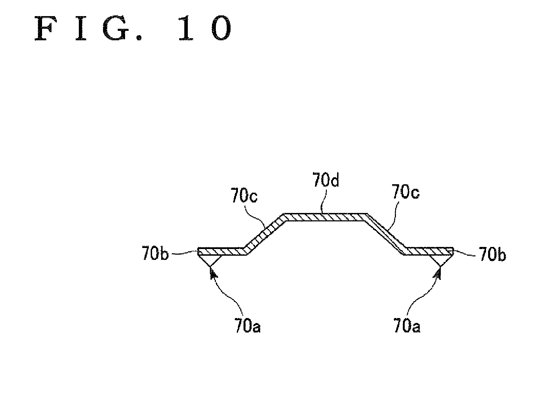

FIG. 8 is a cross-sectional view of a photoelectric conversion element 1C of the present embodiment. FIG. 9 is a perspective view of a conductive member 170A provided in the photoelectric conversion element 1C shown in FIG. 8. FIG. 10 is a cross-sectional view of the conductive member 170A shown in FIG. 9. In the present embodiment, components similar to those of the photoelectric conversion elements of the first and second embodiments are assigned with same reference numerals and explanation thereof is herein omitted.

The photoelectric conversion element 1C of the third embodiment differs from the photoelectric conversion element 1A of the first embodiment in that connection sites 70a by which the conductive member 170A is electrically connected to the second electrode 20 have a protruding shape and a contact portion $\alpha1$ with the second electrode 20 forms a point contact.

In the conductive member 170A used in the present embodiment, connection sites 70a at the second surfaces 70b that are in contact with the second electrode 20 have a protruding shape. As a result, the connection sites 70a bite into the second electrode 20 and are strongly fixed thereto. Further, even when a passivation layer such as an oxide film has been formed on the one surface 20c of the second electrode 20, the conductive member 170A can readily break through the passivation layer and come into contact with the second electrode 20. In particular, where the connection sites 70a have a sharp protruding shape, when a passivation layer such as an oxide film has been formed on the one surface 20c of the second electrode 20, this passivation layer can be broken through even easier and contact with the second electrode 20 can be attained even easier.

As for the contact portion $\alpha1$ of the conductive member 170A and the second electrode 20, it is preferred that the surface of the second electrode 20 be plastically deformed by applying pressure to the contact portion. In the portion in which plastic deformation has occurred, the connection site 70a of the conductive member 170A sinks to a depth of equal to or greater than 250 nm from the average surface of the second electrode 20. As a result, the passivation layer that has been formed on the second electrode 20 is crushed through to connect electrically the conductive member 170A and the second electrode 20 and therefore the electric resistance can be reduced. Further, due to point contact, a sufficient pressurizing force can be obtained.

Therefore, since the passivation layer formed on the surface of the second electrode 20 can be broken through by just applying a pressure to the contact portion $\alpha1$ of the conductive member 170A and the second electrode 20 via the cover member 60, good electric connection, that is, decreased electric resistance, can be conveniently attained without conducting surface treatment of the second electrode 20 and conductive member 170A.

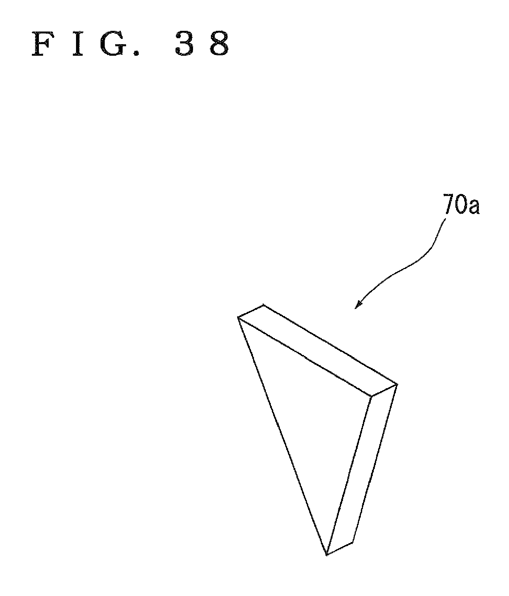

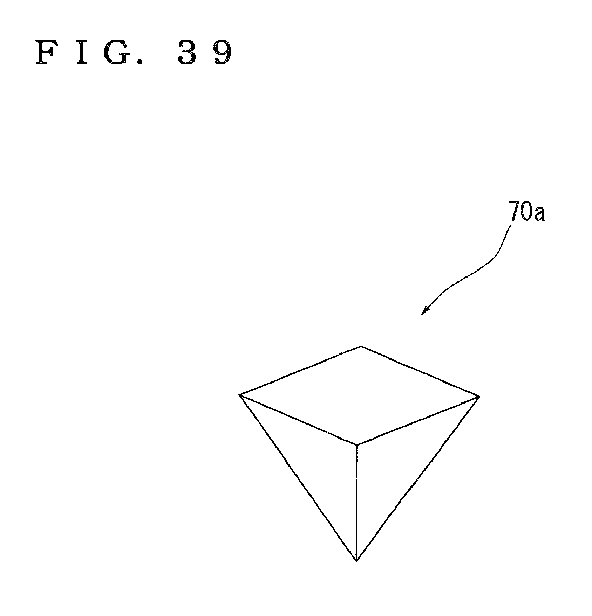

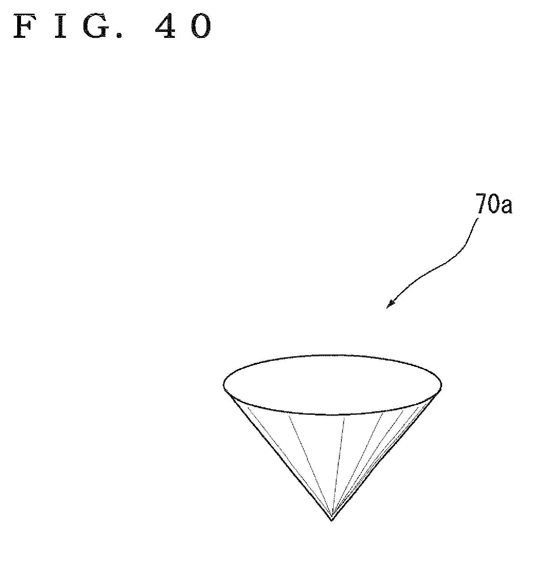

It is preferred that the protruding shape of the conductive member 170A be appropriately adjusted correspondingly to the distance of the separation portion 80 between the structural body 50 and the cover member 60 so as to prevent the application of an excess pressure to the contact portion. In this case, current collection can be performed without damaging the structural body 50. The connection site 70a can be conveniently formed in a desired convex shape by machining with a laser or the like. For example, in the present embodiment, the connection site 70a has a triangular plate shape as shown in FIG. 38, but it may also have a tetragonal pyramidal shape (see FIG. 39) and a conical shape (see FIG. 40).

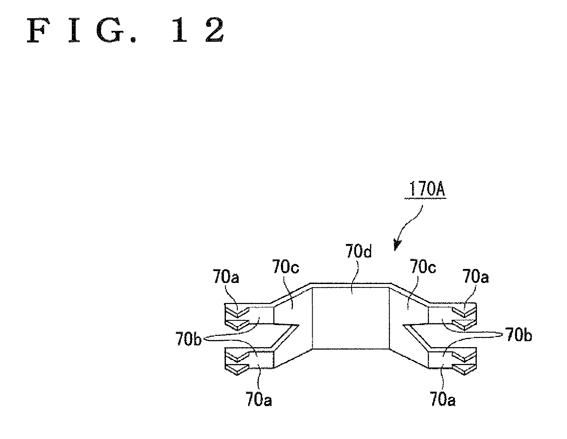

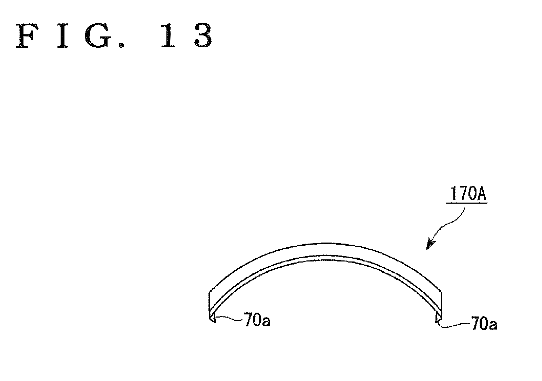

Similarly to the conductive member 70A used in the first embodiment and illustrated by FIG. 5, the conductive member 170A used in the present embodiment also can be a conductive member provided with a necking portion in the first surface 70c, a conductive member in which the first surface 70c is divided in the intermediate section and a plurality of second surfaces 70b are provided with respect to one first surface 70c, and a conductive member composed of a curved surface. FIG. 11 is a perspective view illustrating an example of the conductive member 170A provided with a necking portion in the first surface 70c. FIG. 12 is a perspective view illustrating an example of the conductive member provided with a plurality of second surfaces 70b with respect to one first surface 70c. As shown in FIG. 12, by providing a plurality of protruding sites in each of the second surfaces 70b, it is possible to increase further the positional stability of the conductive member 170A with respect to the second electrode 20 and also to facilitate the collection of current from the second electrode 20. FIG. 13 is a side view illustrating schematically another example of the conductive member 170A. As shown in FIG. 13, by using the conductive member 70 with a curved surface, that is, the conductive member 70 of an arch-like shape, it is possible to ensure the efficient transfer of force when the conductive member 170A is pressurized and break through the passivation layer reliably.

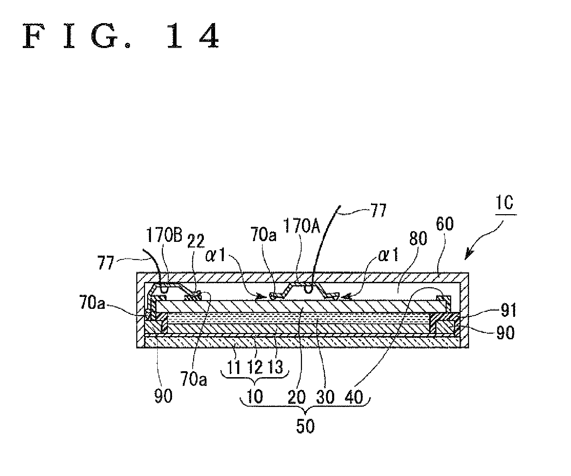

Further, as shown in FIG. 14, in the present embodiment, when current collection is performed from the first electrode 10 in the same manner as in the second embodiment illustrated by FIG. 7, the wiring 90 can be provided at the first electrode 10 and a state can be obtained in which the conductive member 170B is electrically connected to the first electrode 10 via the wiring 90. In this case, it is preferred that the connection site 70a of the conductive member 170B that is in contact with the insulating film 22 do not have a protruding shape. In this case, the connection site 70a can be prevented from passing through the insulating film 22 and electrically connecting to the second electrode 20. By so electrically connecting the conductive members 170B, 170A to the first electrode 10 and the second electrode 20, respectively, it is possible to increase the yield, without damaging the first electrode 10, the second electrode 20, or the structural body 50 and conduct current collection conveniently from the fist electrode 10 and the second electrode 20. Further, since the conductive members 170A, 170B have protruding connection sites 70a, electric resistance can be decreased, as described hereinabove.

It is also preferred that the conductive members 170A, 170B be elastically deformable similarly to the conductive member 70A and be disposed in a state of compression by the cover member 60 and the first electrode 10. The elastic constants of the conductive members 170A, 170B are also similar to that of the conductive member 70A.

Fourth to Sixth Embodiments

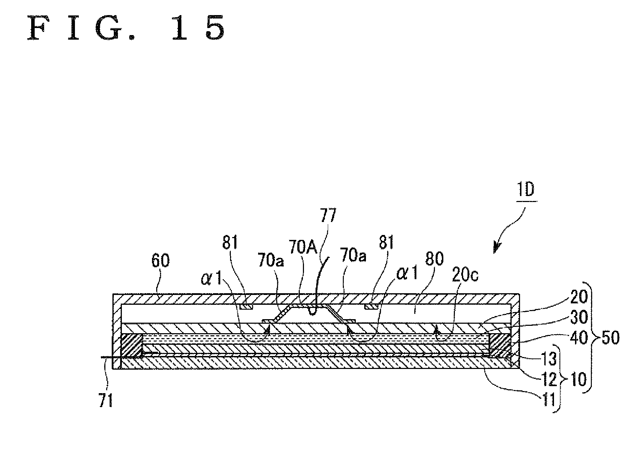

FIGS. 15 to 17 are cross-sectional views illustrating schematically the photoelectric conversion elements (1D-1F) of the fourth to sixth embodiments. In the fourth to sixth embodiments, components similar to those of the photoelectric conversion elements (1A-1C) of the first to third embodiments are assigned with same reference numerals and explanation thereof is herein omitted.

The photoelectric conversion elements (1D-1F) of the fourth to sixth embodiments differ from the photoelectric conversion elements (1A-1C) of the first to third embodiments in that a drying means 81 is provided in the separation portion 80.

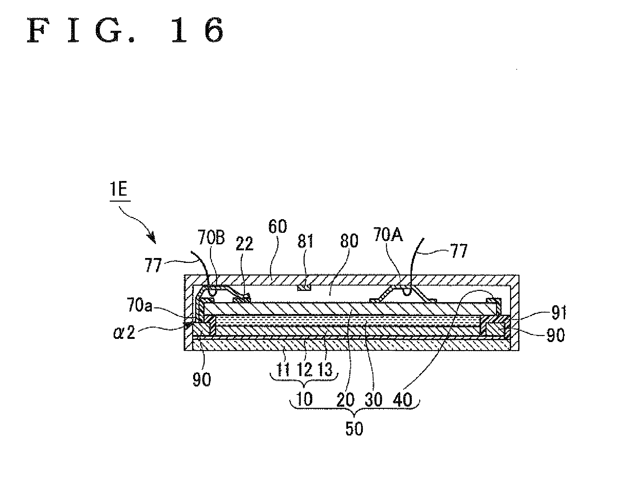

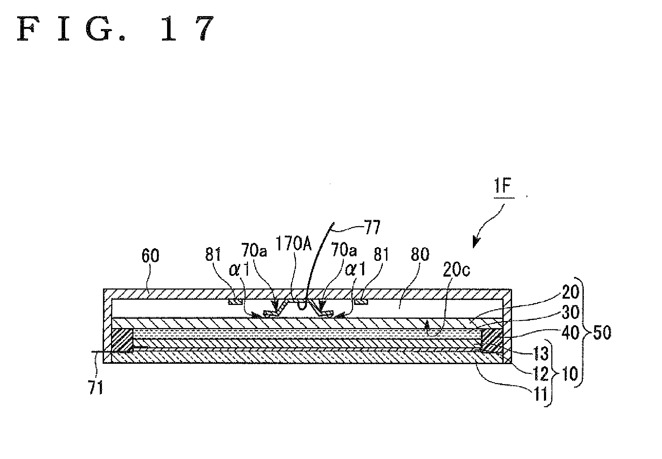

The photoelectric conversion element 1D of the fourth embodiment shown in FIG. 15 is obtained by providing the drying means 81 in the separation portion 80 of the photoelectric conversion element 1A of the first embodiment. The photoelectric conversion element 1E of the fifth embodiment shown in FIG. 16 is obtained by providing the drying means 81 in the separation portion 80 of the photoelectric conversion element 1B of the second embodiment. The photoelectric conversion element 1F of the sixth embodiment shown in FIG. 17 is obtained by providing the drying means 81 in the separation portion 80 of the photoelectric conversion element 1C of the third embodiment.

For example, a drying agent such as silica gel or molecular sieves can be used as the drying means 81.

Where the drying means 81 is provided in the separation portion 80, even if moisture penetrates into the separation portion 80, the drying means 81 can absorb the moisture maintain the separation portion 80 in a dried state. Therefore, the dry state of the separation portion 80 can be maintained with good stability for a long time and good electric connection between the second electrode 20 and the conductive members 70A, 170A or between the first electrode 10 and the conductive member 70B can be maintained. Therefore, photoelectric conversion elements (1D-1F) with excellent resistance to environment can be obtained.

In particular, in the photoelectric conversion element 1F of the sixth embodiment that is obtained by providing the photoelectric conversion element 1C of the third embodiment with the drying means 81, by providing the drying means 81 in the separation portion 80, it is possible to prevent a passivation layer from being formed again in the contact portion $\alpha 1$ and to suppress the increase in electric resistance even after the contact portion $\alpha 1$ has been formed by the conductive member 170B piercing through the passivation layer formed on the second electrode 20.

Seventh Embodiment

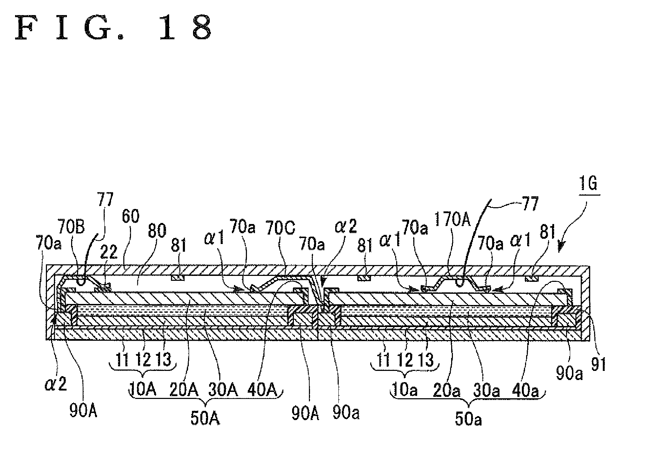

FIG. 18 is a cross-sectional view illustrating schematically a photoelectric conversion element 1G according to the seventh embodiment. In the present embodiment, components similar to those of the photoelectric conversion elements of the first to sixth embodiments are assigned with same reference numerals and explanation thereof is herein omitted.

The photoelectric conversion element 1G of the seventh embodiment includes a structural body 50A and a structural body 50a. The structural body 50A is composed of at least a conductive first electrode 10A provided with a porous oxide semiconductor layer 13 supporting a sensitizing dye, a second electrode 20A provided opposite the first electrode 10A, and an electrolyte 30A provided in at least part of a space between the first electrode 10A and the second electrode 20A. The structural body 50a is composed of at least a conductive first electrode 10a provided with a porous oxide semiconductor layer 13 supporting a sensitizing dye, a second electrode 20a provided opposite the first electrode 10a, and an electrolyte 30a provided in at least part of a space between the first electrode 10a and the second electrode 20a. In this configuration the first electrodes 10A, 10a are similar to the first electrode 10, the second electrodes 20A, 20a are similar to the second electrode 20, and the electrolytes 30A, 30a are similar to the electrolyte 30. The photoelectric conversion element 1G further includes a conductive member 70C that electrically connects the second electrode 20A of one structural body 50A and the first electrode 10a of the other structural body 50a.

Similarly to the fifth embodiment, material that causes passivation cannot be necessarily used to constitute the wiring 90.

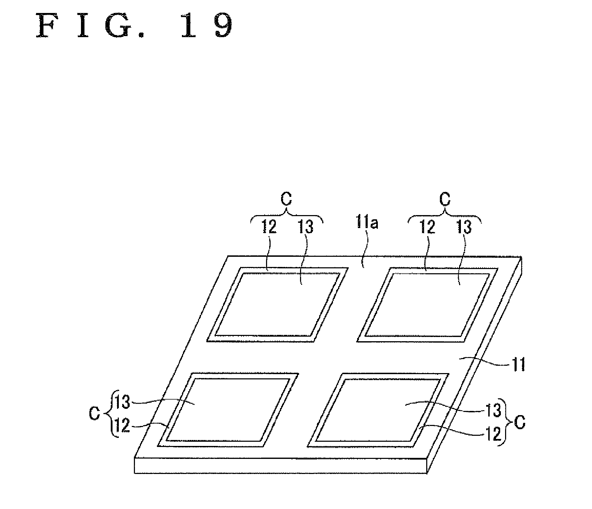

In the present embodiment, for example, as shown in FIG. 19, the first base material 11 may be a module in which a plurality (four in the example shown in the figure) of cell units C having formed therein a power-generating layer composed of the transparent conductive film 12 and the porous oxide semiconductor layer 13 are two-dimensionally arranged on the one surface 11a of the first base material. As a result, it is possible to obtain a photoelectric conversion element of increased surface area and reduced weight that can be set to any element output.

One end of the conductive member 70C is in contact with the second electrode 20A of the one structural body 50A and the other end of the conductive member is in contact with the wiring 90a of the other structural body 50a, thereby electrically connecting them and establishing electric conduction between the one structural body 50A and the other structural body 50a. The connection site 70a of the conductive member 70C that is in contact with the second electrode 20A preferably has a protruding shape. As a result, similarly to the configuration of the third embodiment, the passivation layer is pierced through, contact portions $\alpha1$, $\alpha2$ are formed, and electric connection is ensured, whereby the electric resistance is reduced.

Further, in the present embodiment, the conductive member 70C is fixed to the cover member 60. Thus, the conductive member 70C is sandwiched between the cover member 60 and the first electrode 10a and also between the cover member 60 and the second electrode 20A. As a result, in the conductive member 70C, the second electrode 20A of the one structural body 50A and the wiring 90a of the other structural body 50a can be brought into contact with good positional accuracy and the reliability of electric connection can be increased.

Thus, electric conduction between the structural bodies 50A, 50a can be conveniently ensured by electrically connecting the one structural body 50A with the other structural body 50a by using the conductive member 70C. Further, the conductive member 70C is sandwiched between the cover member 60 and the first electrode 10a and also between the cover member 60 and the second electrode 20A. As a result, no soldering is required, the structural body 50, namely, the wiring 90, the second electrode 20 or the like, can be prevented from damage caused by the heat generated during soldering, and the photoelectric conversion characteristic can be prevented from being degraded.

In the example shown in the figure, two structural bodies are used, but the present invention is not limited to this configuration and three or more structural bodies may be used so that the adjacent structural bodies are electrically connected by using the conductive members 70C.

Further, by using the conductive member 170A or 170B in the same manner as in the first to third embodiments of the present invention when current collection is performed from the first electrode 10 and the second electrode 20, it is possible to collect current conveniently from the first electrode 10 and the second electrode 20. In particular, when current collection is performed from the second electrode 20, by using the conductive member 170A such as used in the third embodiment, it is possible to ensure electric conduction by breaking through the passivation layer formed on the second electrode 20 and therefore the electric resistance can be reduced.

Similarly to the fourth to sixth embodiments, the drying means 81 can be provided in the separation portion 80. Where the drying means 81 is provided, even if moisture penetrates into the separation portion 80, the drying means 81 can absorb the moisture and maintain the separation portion 80 in a dried state. Therefore, the dry state of the separation portion 80 can be maintained with good stability for a long time and good electric connection between the second electrode 20 and the conductive members 170A, 70C or between the first electrode 10 and the conductive members 170B, 70C can be maintained. Therefore, the photoelectric conversion element 1G with excellent resistance to environment can be obtained.

Eighth Embodiment

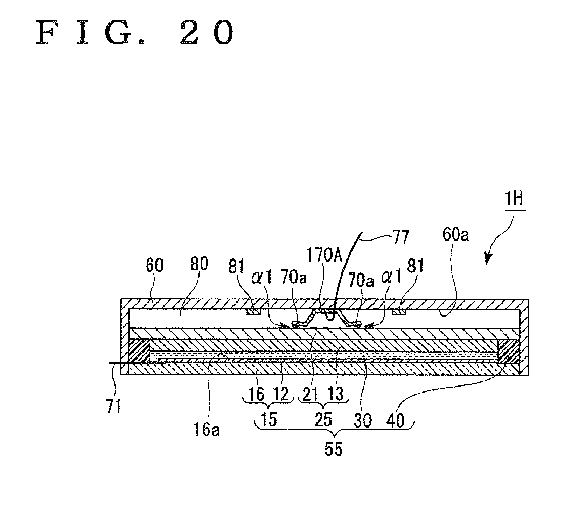

FIG. 20 is a cross-sectional view illustrating schematically a photoelectric conversion element 1H according to the eighth embodiment. In the present embodiment, components similar to those of the photoelectric conversion element 1A of the first embodiment are assigned with same reference numerals and explanation thereof is herein omitted.

The photoelectric conversion element 1H of the present embodiment is essentially constituted by a structural body 55 composed of at least a third electrode 25 composed of an electrically conductive member provided with a porous oxide semiconductor layer 13 supporting a photosensitive dye, a conductive fourth electrode 15, and an electrolyte 30 provided in at least part of a space between the third electrode 25 and the fourth electrode 15. Further, the photoelectric conversion element 1H also has a cover member 60 that covers the structural body 55 so that a separation portion 80 is provided between the third electrode 25 and the cover member and the fourth electrode 15 is exposed and at least one conductive member 170A provided at a surface 60a of the cover member 60 that faces the third electrode 25. The conductive member 170A is electrically connected by contact to the third electrode 25.

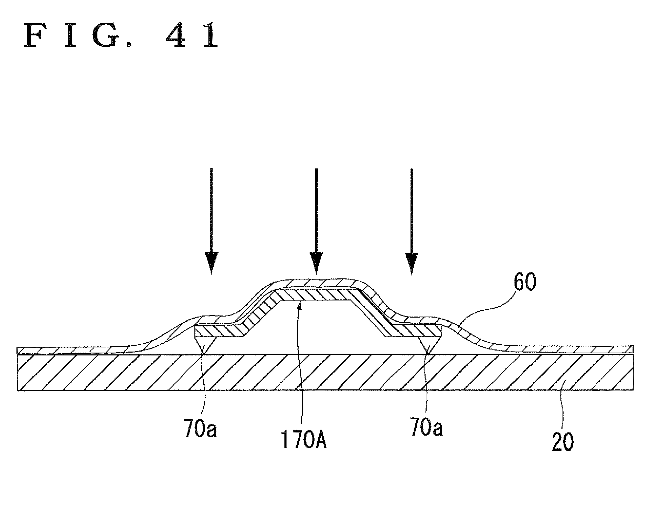

In the present embodiment, the structural body 55 and the cover member 60 may have flexibility. When a resin is used as the cover member 60, and sealing ability can be increased by providing a gas barrier film (not shown in the figure). As a result, the formation of a passivation layer on the contact portion $\alpha1$ of the conductive member 170A and the structural body 55 can be prevented and good electric connection can be maintained. In this case, it is preferred that the cover member 60 be caused to apply a pressure to the conductive member 170A by pushing from the outside or reducing the internal pressure, as shown in FIG. 41, to ensure a pressurizing force of the conductive member 170A.

In the third electrode 25 the porous oxide semiconductor layer 13 is formed on a conductive metal substrate 21. The metal substrate 21 is similar to the metal substrate 21 forming the second electrode 20 in the first embodiment. Further, the porous oxide semiconductor layer 13 is similar to the porous oxide semiconductor layer 13 constituting the first electrode 10 of the first embodiment.

The fourth electrode 15 is a transparent electrode composed of a conductive substrate, for example, a fourth base material 16 and a transparent conductive film 12 provided on one surface 16a of the fourth base material 16. The fourth base material 16 and the transparent conductive film 12 are respectively similar to the first base material 11 and the transparent conductive film 12 forming the first electrode 10 of the first embodiment.

The electrolyte 30, sealing resin 40, and cover member 60 are similar to those of the first embodiment. The conductive member 170A may be the conductive member 70A of the first embodiment.

In the present embodiment, light is incident on the photoelectric conversion element 1H from the fourth electrode 15 side. Therefore, when the entire structural body 55 is covered with the cover member 60, it is preferred that at least a portion of the cover member 60 that is on the fourth electrode 15 side have light transmissivity.

In the photoelectric conversion element 1H of the present embodiment, the conductive member 170A is also sandwiched between the cover member 60 and the third electrode 25 and electrically connected to the third electrode 25 of the structural body 55. As a result, current collection can be conveniently performed from the third electrode 25. Since no soldering or the like is required, the structural body 55 can be prevented from damage induced by the heat generated during soldering, and the degradation of the photoelectric conversion characteristic can be prevented. The contact portion $\alpha 1$ of the conductive member 170A and the third electrode 25 is brought into contact by causing plastic deformation and contact thereof is ensured by piercing the passivation layer formed on the third electrode 25. Therefore, the electric resistance can be decreased.

Ninth Embodiment

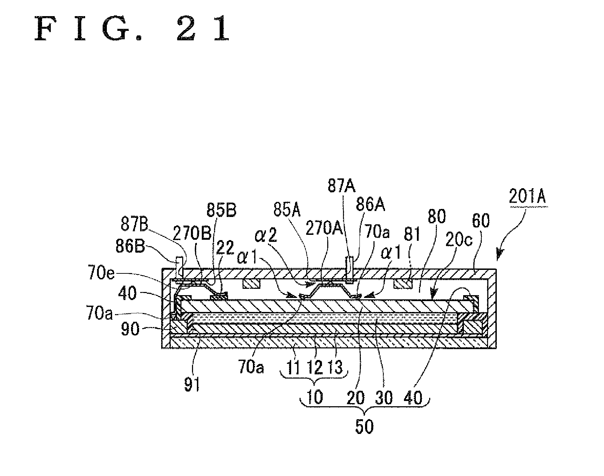

FIG. 21 is a cross-sectional view illustrating schematically a photoelectric conversion element 201A according to the ninth embodiment of the present invention. In the present embodiment, components similar to those of the photoelectric conversion elements of the first to eighth embodiments are assigned with same reference numerals and explanation thereof is herein omitted.

The photoelectric conversion element 201A shown in FIG. 21 represents an example in which wiring portions 85A, 85B are wiring portions formed, for example, by a printing method, and the locations where the wiring portions 85A, 85B are provided are on the inner surface of the cover member 60.

The photoelectric conversion element 201A of the ninth embodiment is essentially constituted by a structural body 50 composed of at least a conductive first electrode 10 provided with a porous oxide semiconductor layer 13 supporting a photosensitive dye, a second electrode 20 diposed opposite the first electrode 10, an electrolyte 30 provided in at least part of a space between the first electrode 10 and the second electrode 20, and sealing resins 40, 91 bonding together the first electrode 10 and the second electrode 20 and sealing the electrolyte 30, a cover member 60 that covers the structural body 50 and forms a separation portion 80 between the cover member and the second electrode 20, and wiring 90 provided so as to surround the porous oxide semiconductor layer 13 on the surface of the first electrode 10. The wiring portion 85A for ensuring electric connection with the second electrode 20 is provided on the inner surface of the cover member 60 on the separation portion 80 side. The photoelectric conversion element 201A also has a conductive member 270A that is pressurized by and brought into contact with the second electrode 20 and the wiring portion 85A, and a conductive member 270B which electrically connects the wiring portion 85B to the first electrode 10. The conductive member 270A is disposed in a path for taking out the output from the second electrode 20, and the conductive member 270B is disposed in the path for taking out the output from the first electrode 10.

The wiring portions 85A, 85B are provided on the inner surface of the cover member 60 on the separation portion 80 side. In the present embodiment, these portions are printed wiring portions formed on the inner surface of the cover member 60. The wiring portions 85A, 85B are formed by print coating an electrically conductive paste on the inner surface of the cover member 60 by a printing method such as a screen printing method.

A conductive member similar to the conductive member 170A of the fourth embodiment, but additionally having a convex second connection site 70e on top surface 70d on the cover member 60 side is used as the conductive member 270A. In the contact portions $\alpha 1$ and $\alpha 2$ of the conductive member 270A with the second electrode 20 and with the wiring portion 85A, respectively, parts of the wiring portion 85A and the second electrode 20 are plastically deformed by pressurization-induced contact. In particular, in the plastically deformed portions, the contact portions $\alpha 1$ and $\alpha 2$ of the conductive member 270A penetrate to a depth of equal to or greater than 250 nm from the average surface of the second electrode 20 and the wiring portion 85A. Thus, the conductive member 270A pierces the passivation layer formed on the second electrode 20 and is electrically connected to the second electrode 20 and the wiring portion 85A. Therefore, the electric resistance can be reduced. A conductive member similar to the conductive member 170B or the conductive member 70B, but additionally having a concave second connection site 70e on the top surface 70d on the cover member 60 side can be used as the cover member 270B.

The conductive member 270A is preferably provided so as to be electrically connected to the central portion of the one surface 20c of the second electrode 20. As a result, current collection can be performed with high efficiency from the center of the one surface 20c of the second electrode 20. Further, it is preferred that a plurality of sites 70a (first connection sites) which are the sites of the conductive member 270A that are in contact with the second electrode 20 and a plurality of sites 70e (second connection sites) which are the cites of the conductive member that are in contact with the wiring portion 85 be provided. With such a configuration, even if an obstacle appears in one of the first connection sites 70a, other first connection sites serve as a backup.

The cover member 60 is provided so that the separation portion 80 is provided between the cover member and the second electrode 20 in order to obtain a dry state of the contact portions α1 and α2 of the conductive members 270A, 270B and the first electrode 10, second electrode 20, and wirings 85A, 85B. The cover member 60 covers the structural body 50 and may cover the entire structural body 50 or may cover the structural body 50 so that the second electrode 20 is covered and the first electrode 10 is exposed.

In particular, when the cover member 60 covers the entire structural body 50, at least a portion of the cover member on the first electrode 10 side has light transmissivity. A resin, glass, or a metal plate can be used as the cover member 60, and the cover member 60 can be appropriately selected for use correspondingly to the shape required to cover the structural body 50. When the structural body 50 is covered so that the first electrode 10 is exposed, for example, aluminum, which is a lightweight metal that is easy to process and excels in corrosion resistance, can be used as a material constituting the cover member 60. When a resin is used as the cover member 60, the resin can be provided with a gas barrier film (not shown in the figure) such as a vapor-deposited aluminum film, alumina film, silica film, and polyvinyl alcohol film to increase sealing ability. As a result, formation of a passivation layer on a contact portion α1, which is a contact portion of the conductive members 270A, 270B with the first electrode 10 and the second electrode 20, can be inhibited and good electric connection can be ensured.

As described hereinabove, the wiring portions 85A, 85B are formed on the inner surface of the cover member 60, but in this case, for example, an insulating film is formed over the entire surface of the cover member 60 serving as a region at least for carrying the wiring portions 85A, 85B on the inner surface and outer surface of the cover member 60, and the wiring portions 85A, 85B are formed on the insulating film. This is done to prevent the wiring portions 85A, 85B and the first electrode 10 from short circuiting.

Through holes 87A, 87B through which the separation portion 80 communicates with the outside are formed in the cover member 60. Through connectors 86A, 86B are inserted, in a state of insulation from the cover member 60, into the through holes 87A, 87B. One end side of the through connectors 86A, 86B (first terminals) exposed inside the separation portion 80 is electrically connected to the wiring portion 85 provided on the inner surface side of the cover member 60, and the other end side is exposed to the outside. With such a configuration, current collection from the first electrode 10 and the second electrode 20 is performed via the conductive members 270A, 270B, wiring portions 85B, 85A, and through connectors 86A, 86B.

In the present embodiment, the conductive member 270B is electrically connected by contact to the wiring 90 formed at the first electrode 10. Since the surface area of the wiring 90 exposed to the separation portion 80 is much smaller than the surface area of the second electrode 20, the two ends are not in contact, as in the conductive member 270A, only one end of the conductive member 270B is in contact with the wiring 90, and the other end is in contact with the insulating film 22 provided on the second electrode 20. In order to prevent the first connection site 70a of the conductive member that is in contact with the insulating film 22 from passing through the insulating film 22 and being electrically connected to the second electrode 20, it is preferred that the first connection site 70a do not have a convex shape.

In the photoelectric conversion element 201A according to the ninth embodiment, the conductive member 270A is sandwiched between the cover member 60 and the second electrode 20. Therefore, the conductive member 270A is fixed, without soldering, in a predetermined position on the second electrode 20. Further, the conductive member 270A is electrically connected by contact to the second electrode 20 and the wiring portion 85A, and the second electrode 20 and the through connector 86A are electrically connected to each other.

Likewise, the conductive member 270B is sandwiched between the cover member 60 and the first electrode 10. Therefore, the conductive member 270B is fixed, without soldering, in a predetermined position on the first electrode 10. Further, the conductive member 270B is electrically connected by contact to the first electrode 10 and the wiring portion 85B, and the first electrode 10 and the through connector 86B are electrically connected to each other.

Therefore electric conduction to the outside can be conveniently performed, and when electricity generated by the structural body 50 is taken out, current collection can be conveniently performed from the conductive members 270A, 270B.

Further, when current collection is performed from the first electrode 10 and the second electrode 20, it is not necessary to connect the wirings or the like by soldering. Therefore, the first electrode 10, the second electrode 20, or the structural body 50 (in particular, the porous oxide semiconductor layer 13) can be prevented from being damaged or degraded by the heat generated in soldering, and degradation of the photoelectric conversion characteristic can be inhibited. For this reason, with the photoelectric conversion element 201A, current collection can be conveniently performed without degrading the photoelectric conversion characteristic.

Further, the first connection site 70a by which the conductive member 270A comes into contact with the second electrode 20 has a convex (protruding) shape. Therefore, the first connection site 70a can bite into the second electrode 20, and the conductive member 270A can be more strongly fixed to the second electrode 20. Even in the case in which a passivation layer such as an oxide film has formed on the one surface 20c of the second electrode 20, this passivation layer can be easily broken through and contact with the second electrode 20 and the wiring portion 85A can be easily attained. In particular, where the first connection site 70a has a sharp convex shape, even when a passivation layer such as an oxide film has been formed on the one surface 20c of the second electrode 20, this passivation layer can be broken through even easier and contact with the second electrode 20 and the wiring portion 85A can be attained even easier. Furthermore, by ensuring point contact of the first connection site 70a with the second electrode 20 and of the second connection site 7e with the wiring portion 85A, it is possible to obtain a sufficient pressurizing force acting upon the wiring portion 85A and the second electrode 20 and connection reliability can be improved. Therefore, when the cover member 60 is used, the passivation layer formed on the second electrode 20 can be broken through by just pressurizing the contact portions $\alpha 1$, $\alpha 2$ of the conductive member 270A with the second electrode 20 and the wiring portion 85A via the cover member 60. Therefore, good electric connection, that is, reduction in electric resistance, can be ensured without performing surface treatment of the second electrode 20 and wiring portions 85A or the conductive member 270A. It is preferred that the protruding shape of the conductive member 270A be appropriately adjusted correspondingly to the distance of the separation portion 80 between the structural body 50 and the cover member 60 so as to prevent the application of an excess pressure to the contact portion. In this case, current collection can be performed without damaging the structural body 50. The first connection site 70a and the second connection site 70e can be conveniently formed in a desired convex shape by machining with a laser or the like.

Further, in the photoelectric conversion element 201A, the second connection site 70e of the conductive member 270A is in contact with the wiring portion 85A and made convex. As a result, the second connection site 70e can be caused to bite into the wiring portion 85A, and the conductive member 270A can be fixed stronger to the wiring portion 85A. Therefore, sufficient conduction between the wiring portion 85A and the conductive member 270A can be ensured and the occurrence of poor conduction can be sufficiently prevented. Further, by providing the wiring portion 85A at the cover member 60, it is possible to ensure the conduction to the outside more conveniently than in the case in which the wiring portion 85A is not provided.

The photoelectric conversion element 201A also has the following advantages. Thus, when the conductive member 270A is provided, the conductive member 270A is positioned between the second electrode 20 and the wiring portion 85A provided on the inner surface of the cover member 60, and the distance between the cover member 60 with the wiring portion 85A and the second electrode 20 is reduced by pushing the cover member 60. In this case, the convex second connection site 70e of the conductive member 270A bites into the wiring portion 85A and is supported in the fixed position. Where the conductive member 270A is compressed in this state, convex first connection site 70a moves along the second electrode 20, the second connection site 70e serving as a pivot point. As a result, the passivation layer of the upper surface of the second electrode 20 along which the second connection site 70e moves undergoes plastic deformation and is broken through, whereby reliable electric connection of the first connection site 70a and the second electrode 20 is ensured. Thus, where the cover member 60 is provided, the conductive member 270A efficiently pierces through the passivation layer formed on the second electrode 20 and conduction is established by just applying an appropriate pressure to the cover member 60 when the cover member 60 is mounted. Therefore, the electric resistance can be conveniently reduced.

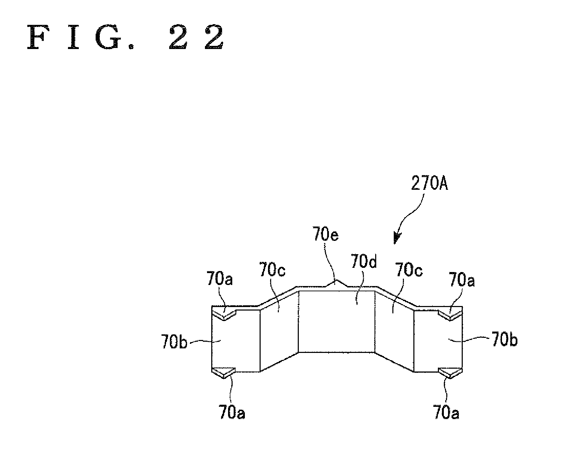

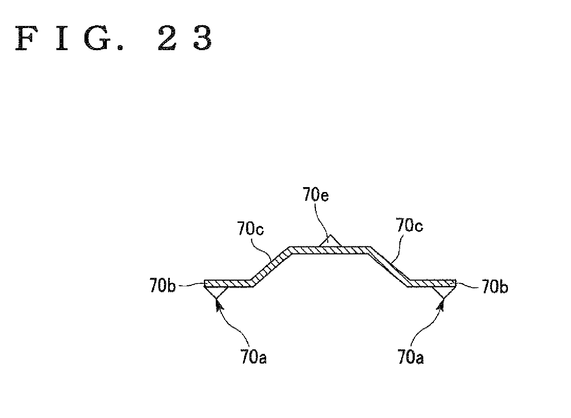

FIG. 22 is a perspective view illustrating schematically the conductive member 270A for use in the photoelectric conversion element according to the ninth embodiment of the present invention. FIG. 23 is a cross-sectional view illustrating the conductive member shown in FIG. 22. The conductive member 270A is composed of a flat top surface 70d, inclined first surfaces 70c, second surfaces 70b parallel to the top surface 70d, convex connection sites (first connection sites) 70a formed at the second surface 70b, and a convex connection site (second connection site) 70e formed at the top surface 70d. By forming the conductive member 270A having a plurality of surfaces, it is possible to provide the conductive member with appropriate elasticity.

The second connection site 70e provided at the top surface 70d of the conductive member 270A will come into contact with the wiring portion 85A provided on the lower surface of the cover member 60, and the first connection site 70a provided at the second surface 70b will come into contact with the fist electrode 10 or the second electrode 20. The first surfaces 70c and the second surfaces 70b can be provided with elasticity matching the size of the separation portion 80 or the structural body 50 that will be used, by appropriately adjusting the shape of the first and second surfaces by changing the inclination angle, length, thickness, or width thereof or by providing a necking portion.

In the configuration shown in FIGS. 22 and 23, one second surface 70b is provided with respect to one first surface 70c, but such a shape of conductive member 270A is not limiting and, for example, the first surfaces 70c can be branched off from the intermediate portion thereof and a plurality of second surfaces 70b may be provided with respect to one first surface 70c.

It is preferred that the conductive member 270A be formed from an elastically deformable material. In such a case, an appropriate pressurizing force can be maintained. When the pressurizing force is insufficient, the passivation layer of the second electrode 20 can grow again. Further, when the pressurizing force is too strong, the conductive member 270A can pierce the second electrode 20 and the wiring portion 85A and the first electrode 10 can be crushed via the second electrode 20. By providing such an elastically deformable conductive member 270A in contact with the second electrode 20 of the structural body 50 and the wiring portion 85A, it is possible to inhibit the damage of the second electrode 20, structural body 50, and wiring portion 85A, increase the yield, and prevent the passivation layer from growing again and increasing the resistance value.

In this configuration, the conductive member 270A is preferably fixed in a state of compression between the cover member 60 and the wiring portion 85A. In this case, mechanical contact with the second electrode 10 can be ensured by an appropriate pressurizing force. In addition, even when the distance between the cover member 60 and the second electrode 20 changes due to variations in the external air temperature, the conductive member 270A can deform to accommodate this change. Therefore, conduction between the cover member 60 and the second electrode 20 can be ensured at all times and insufficient conduction caused by changes in air temperature can be prevented. The elastic constant of the conductive members 270A, 270B is similar to that of the conductive member 70A.

A drying agent can be provided as a drying means 81 in at least part of the separation portion 80. As a result, even if moisture penetrates into the separation portion 80, the drying agent can absorb the moisture and maintain the separation portion 80 in a dried state. As a result, the penetration of moisture into the structural body 50 and formation of the passivation layer again on the second electrode 20 can be inhibited more effectively. Therefore, good electric connection of the second electrode 20 to the wiring portion 85A and the conductive member 270A can be maintained and the initial resistance value can be maintained over a long period. Therefore, a photoelectric conversion element with excellent resistance to environment can be obtained.

Tenth Embodiment

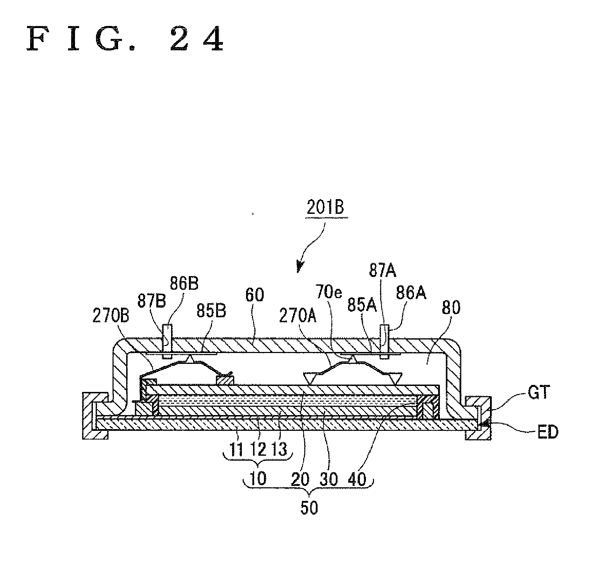

FIG. 24 is a cross-sectional view illustrating schematically a photoelectric conversion element 201B according to the tenth embodiment. In the present embodiment, components similar to those of the photoelectric conversion elements of the ninth embodiment are assigned with same reference numerals and explanation thereof is herein omitted.

In the photoelectric conversion element 201B according to the tenth embodiment illustrated by FIG. 24, a gasket GT is used to join the first base material 11 and the cover member 60. The gasket GT performs sealing at the outer circumferential end ED of the first base material 11, while providing the separation portion 80 between the first electrode 10 and the cover member 60 so as to incorporate the second electrode 20 therein.

Thus, in the present embodiment, gasket GT is used for sealing at the outer circumferential end ED of the first base material 11, while providing the separation portion 80 between the first electrode 10 and the cover member 60 so as to incorporate the second electrode 20 constituting the structural body 50 therein. By so covering the second electrode 20 in a dry state by the cover member 60, it is possible to maintain the separation portion 80 in a dried state. Therefore, the formation of a passivation layer on the one surface 20c of the second electrode 20 can be inhibited. Further, the penetration of moisture or the like into the structural body 50 can be inhibited. In this case, the aforementioned drying means 81 is preferably provided in the separation portion 80 to maintain the dry state. As a result, good electric connection of the first electrode 10 and the conductive member 270B can be maintained, good electric connection of the second electrode 20 to the wiring portion 85A and the conductive member 270A can be maintained, and the initial resistance value can be maintained over a long period. Therefore, a photoelectric conversion element 201 with excellent resistance to environment can be obtained.

Eleventh Embodiment

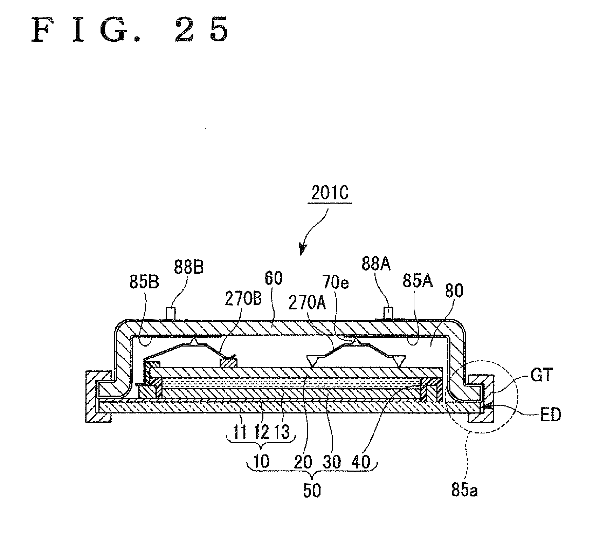

FIG. 25 is a view illustrating schematically a photoelectric conversion element 201C according to the eleventh embodiment. In the present embodiment, components similar to those of the photoelectric conversion elements of the ninth and tenth embodiments are assigned with same reference numerals and explanation thereof is herein omitted.

The photoelectric conversion element 201C shown in FIG. 25 is an example of the photoelectric conversion element in which wiring portions 85A, 85B are printed wirings composed for example of silver, the locations where the wiring portions 85A, 85B are provided are on the inner surface of the cover member 60, and the wiring portions 85A, 85B are taken out from the flanks 85a of the cover member.

More specifically, in the photoelectric conversion element 201C according to the eleventh embodiment, the wiring portions 85A, 85B are printed wiring portions formed from the inner surface to the outer surface of the cover member 60 in the region from the separation portion 80 side to the outer surface. In this case, an insulating film is formed on the surface of the cover member 60 and the printed wirings are formed on the insulating film. Thus, similarly to the ninth embodiment, the wiring portions 85A, 85B are formed by coating an electrically conductive paste on a region from the inner surface to the outer surface of the cover member 60 by a printing method such as screen printing.

Connectors 88A, 88B (second terminal) are fixed to the cover member 60, and the connectors 88A, 88B and the printed wiring portions 85A, 85B are electrically connected. In this embodiment, current collection can be also conveniently performed from the first electrode 10 and the second electrode 20 at the connectors 88A, 88B via the conductive members 270A, 270B and the printed wiring portions 85A, 85B.

In the present embodiment, the wiring portions 85A, 85B are constituted by printed wiring portions, but conductor portions of a flexible printed circuit board (first flexible printed circuit board) may be also used instead of the printed wiring portions. In this case, the required configuration can be obtained by pasting the flexible printed circuit board on the inner surface and outer surface of the cover member 60 with an adhesive or the like.

In the photoelectric conversion element 201C of the eleventh embodiment, the gasket GT is used in the same manner as in the photoelectric conversion element 201B according to the tenth embodiment. The gasket GT seals the outer circumferential ends ED of the first electrode 10 and the cover member 60, while providing the separation portion 80 therebetween, so that the second electrode 20 is inside the separation portion.

Twelfth Embodiment

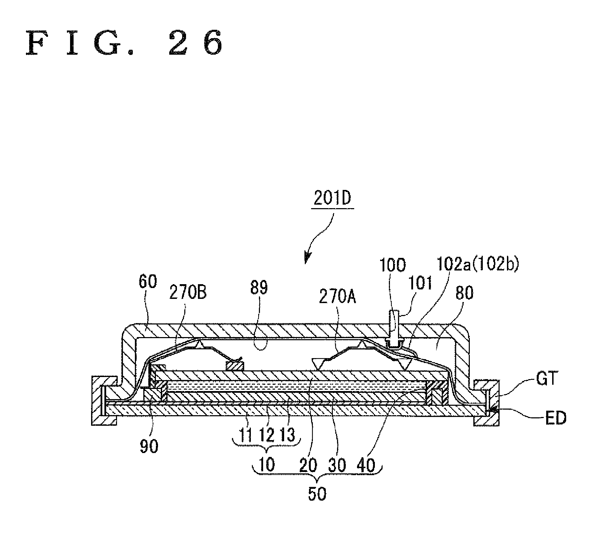

FIG. 26 is a cross-sectional view illustrating schematically a photoelectric conversion element 201D according to the twelfth embodiment. In the present embodiment, components similar to those of the photoelectric conversion elements of the ninth and tenth embodiments are assigned with same reference numerals and explanation thereof is herein omitted.

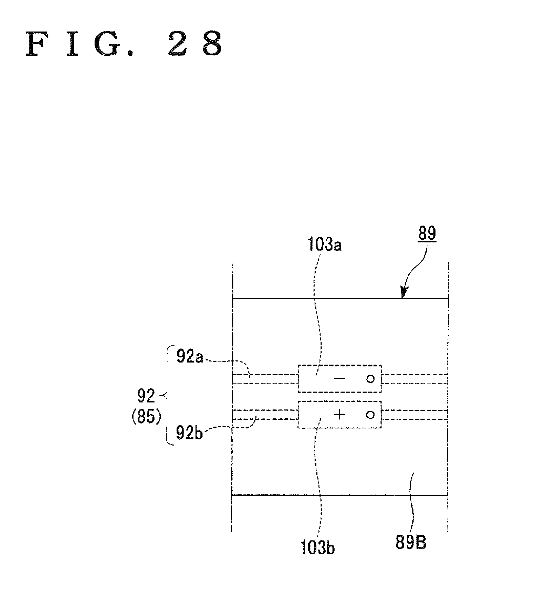

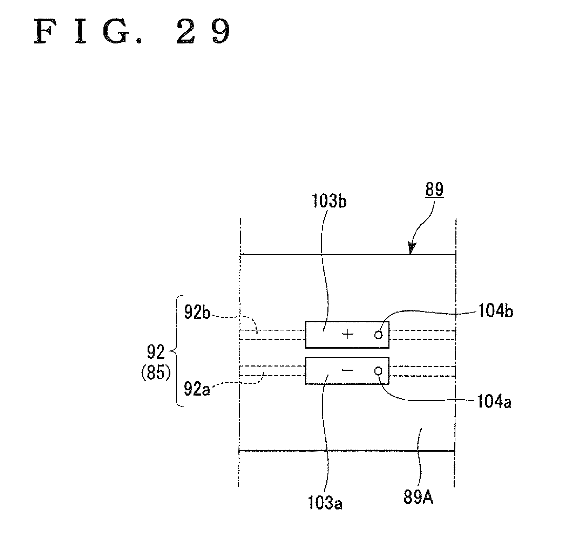

In the photoelectric conversion element 201D shown in FIG. 26, the wiring portions are etching wirings formed for example from copper, and the wiring portions are provided on a flexible printed circuit board 89 having gas barrier properties. The flexible printed circuit board 89 is connected to an external take-out location via lead wires 102a, 102b (see FIG. 28 and FIG. 29). In this example, the external take-out location is a through connector 101 provided in a through hole 100 of the cover member 60.

More specifically, in the photoelectric conversion element 201D of the twelfth embodiment, the flexible printed circuit board 89 (the second flexible printed circuit board) is provided inside the separation portion 80 formed between the structural body 50 and the cover member 60, so as to cover the conductive members 270A, 270B and also to position the conductive members 270A, 270B and seal the space between the flexible printed circuit board and the structural body 50. In the present embodiment, the wiring portion 85 is a conductor 92 of the flexible printed circuit board 89. The through hole 100 through which the separation portion 80 communicates with the outside is formed in the cover member 60, and the through connector 101 (third terminal) is inserted into the through hole 100 in a state of insulation from the cover member 60.

As shown in FIG. 28 and FIG. 29, the flexible printed circuit board (can be referred to hereinbelow as FPC") 89 is an article formed in a band-like shape, and conductors 92a, 92b are provided in the longitudinal direction between insulating layers 89A, 89B located on the front and rear surfaces. Terminal conductors 103a, 103b are formed on part of the front surface side of the FPC 89, and these terminal conductors 103a, 103b are electrically connected to the conductors 92a, 92b via through holes 104a, 104b, respectively, that are formed in the insulating layer 89A. The terminal conductors 103a, 103b and the terminal 101 are connected by lead wires 102a, 102b, respectively. The outputs from the first electrode 10 and the second electrode 20 are taken from the terminal 101 based on this configuration.

In the photoelectric conversion element 201D of the twelfth embodiment, the gasket GT is used in the same manner as in the photoelectric conversion element 201B according to the tenth embodiment. The gasket GT seals the outer circumferential ends ED of the first electrode 10 and the cover member 60, while providing the separation portion 80 therebetween, so that the second electrode 20 is inside the separation portion.

In the photoelectric conversion elements of the present embodiment and the below-described fourteenth embodiment, the flexible printed circuit board 89 has gas barrier properties and therefore the cover member 60 is not necessarily required to have gas barrier properties.

Thirteenth Embodiment

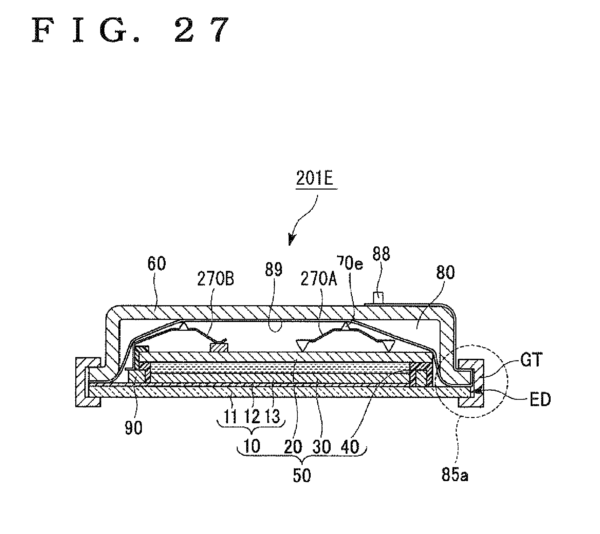

FIG. 27 is a view illustrating schematically a photoelectric conversion element 201E according to the thirteenth embodiment. In the present embodiment, components similar to those of the photoelectric conversion elements of the ninth to twelfth embodiments are assigned with same reference numerals and explanation thereof is herein omitted.

More specifically, the photoelectric conversion element 201E shown in FIG. 27 combines the features of the eleventh and twelfth embodiments. Thus, in the thirteenth embodiment, the flexible printed circuit board 89 (the second flexible printed circuit board) is provided inside the separation portion 80 formed between the structural body 50 and the cover member 60, so as to cover the conductive members 270A, 270B and also to position the conductive members 270A, 270B and seal the space between the flexible printed circuit board and the structural body 50. In the present embodiment, the wiring portion is a conductor of the flexible printed circuit board 89. In the photoelectric conversion element 201E, the end portion of the flexible printed circuit board 89 is extended and a flank 85a of the cover member 60 serves as an external take-out location. The end portion of the flexible printed circuit board 89 is connected to a terminal 88 provided at the outer surface side of the cover member 60. In this configuration, the outputs of the first electrode and the second electrode 20 can be collected on the outer portion of the cover member 60 via the conductive members 270A, 270B, the conductor portion of the flexible printed circuit board 89, and the terminal 88. By contrast with the photoelectric conversion element 201D of the twelfth embodiment, the photoelectric conversion element 201E of the present embodiment does not require to provide the terminal conductors 103a, 103b on the flexible printed circuit board 89, and it is also unnecessary to provide the through holes 104a, 104b. As a result, the photoelectric conversion element 201E can be less expensive than the photoelectric conversion element 201D.

Fourteenth Embodiment

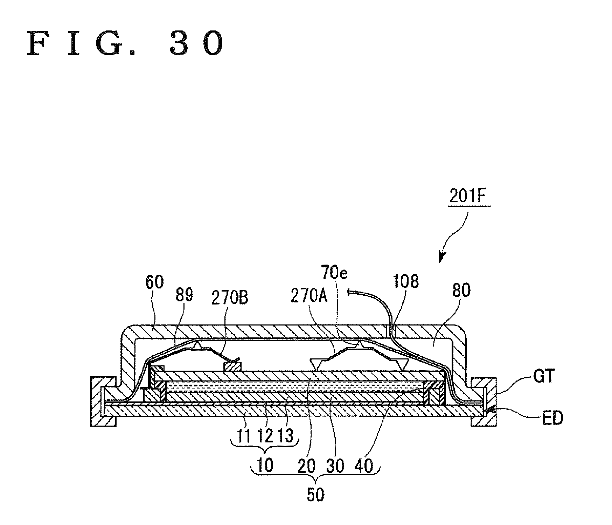

FIG. 30 is a cross-sectional view illustrating schematically a photoelectric conversion element 201F according to the fourteenth embodiment. In the present embodiment, components similar to those of the photoelectric conversion elements of the ninth to thirteenth embodiments are assigned with same reference numerals and explanation thereof is herein omitted.

More specifically, the photoelectric conversion element 201F shown in FIG. 30 is an example of configuration in which the wiring portion is an etching wiring composed for example of copper, the location where the wiring portion is provided is a flexible printed circuit board 89 having gas barrier properties, and the flexible printed circuit board 89 itself passes through a through hole 108 of the cover member that is an external take-out location and is extended to the outside.

In other words, the configuration according to the fourteenth embodiment is obtained by partial modification of the configuration according to the above-described twelfth embodiment. Thus, in the fourteenth embodiment, an opening 108 communicating with the separation portion 80 is formed in the cover member 60. In the photoelectric conversion element 201F, the flexible printed circuit board 89 has an extended end portion, and the end portion 89 is led out to the outside through the opening 108. With the photoelectric conversion element 201F, the output of the second electrode 20 can be collected outside of the cover member 60 via the conductive member 270A and the conductor portion of the flexible printed circuit board 89. In the photoelectric conversion element 201F of the present embodiment, no wiring portion is provided outside the cover member 60. Therefore, the configuration is safer than that of the photoelectric conversion element 201E of the thirteenth embodiment. Further, by contrast with the photoelectric conversion element 201D of the twelfth embodiment, it is not necessary to provide the terminal conductors 103a, 103b at the flexible printed circuit board 89 in the photoelectric conversion element 201F of the present embodiment, and the through holes 104a, 104b are also not required. As a result, the photoelectric conversion element 201F can cost less than the photoelectric conversion element 201D.

Fifteenth Embodiment

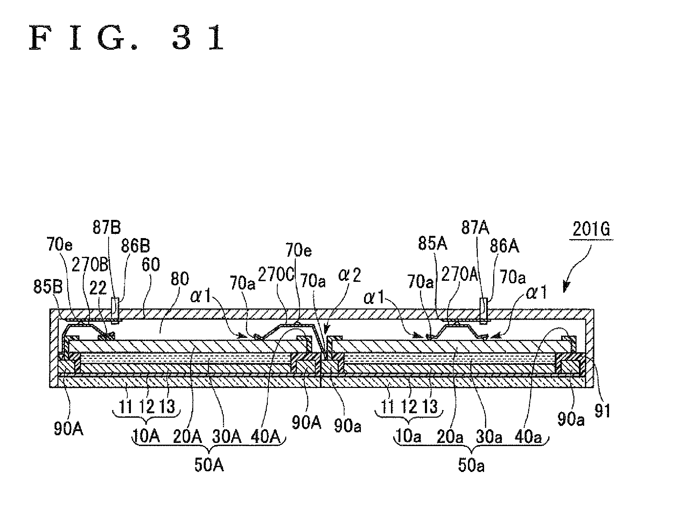

FIG. 31 is a view illustrating schematically a photoelectric conversion element 201G according to the fifteenth embodiment. In the present embodiment, components similar to those of the photoelectric conversion element of the ninth embodiment are assigned with same reference numerals and explanation thereof is herein omitted.

In the present embodiment, there are provided a conductive member 270C that is in contact with a second electrode 20A of one structural body 50A and with a wiring 90a provided at a first electrode 10a of another structural body 50a and electrically connects the one structural body 50A to the other structural body 50a, a conductive member 270B electrically connected to the first electrode 10A and collecting current from the first electrode 10A, and a conductive member 270A electrically connected to the second electrode 20a and collecting current from the second electrode 20a. In this case, a conductive member similar to the conductive member 70C, except that a convex second connecting site 70e is provided on the cover member 60 side of the top surface 70d, is used as the conductive member 270C. With such a configuration, the structural bodies 50A and 50a are electrically connected to each other, and current collection can be conveniently performed from the second electrode 20a and the first electrode 10A, respectively. In addition, since the conductive members 270A, 270C are brought into contact with the second electrodes 20A, 20a in a state in which the second connecting portions 70e of the conductive members 270A, 270C remain in a fixed position, the passivation layers of the second electrodes 20A, 20a can be effectively broken through by the first connection sites 70a of the conductive members 270A, 270C and electric connection of the conductive members 270A, 270C with the second electrodes 20A, 20a can be reliably ensured.

Components similar to those of the ninth embodiment can be used as the second electrode 20, electrolyte 30, sealing resin 40, and cover member 60. Wirings 90A, 90a are provided on the surface of the first electrodes 10A, 10a, respectively. With the photoelectric conversion element 201G of the present embodiment, the structural body 50A and the structural body 50a are connected in series and therefore the voltage can be increased.

Sixteenth Embodiment

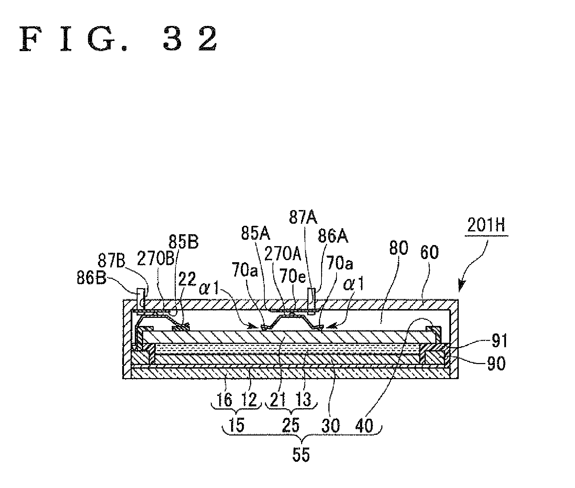

FIG. 32 is a cross-sectional view illustrating schematically a photoelectric conversion element 201H according to the sixteenth embodiment. In the present embodiment, components similar to those of the photoelectric conversion element of the ninth embodiment or tenth embodiment are assigned with same reference numerals and explanation thereof is herein omitted.

The photoelectric conversion element 201H of the sixteenth embodiment differs from the photoelectric conversion element of the ninth embodiment shown in FIG. 1 in that the conductive member 270A is provided on the light incidence side (on a third electrode 25 functioning as a working electrode). In the photoelectric conversion element 201H of the sixteenth embodiment, the drying means 81 shown in FIG. 21 is not clearly presented, but it may be incorporated in the photoelectric conversion element if necessary. Other features are similar to those of the ninth embodiment shown in FIG. 21.

More specifically, the photoelectric conversion element 201H of the present embodiment is mainly constituted by a structural body 55 composed of at least a conductive third electrode 25 composed of a conductive member provided with a porous oxide semiconductor layer 13 supporting a sensitizing dye, a conductive fourth electrode 15, an electrolyte 30 provided in at least part of a space between the third electrode 25 and the fourth electrode 15, and a sealing resin 40 joining the third electrode 25 and the fourth electrode 15 and sealing the electrolyte. The photoelectric conversion element also has a cover member 60 that provides, together with the third electrode 25, a separation portion 80 and that covers the structural body 55 so that the fourth electrode 15 is exposed, and at least one conductive member 270A provided at a surface 60a of the cover member 60 facing the third electrode 25, wherein the conductive member 270A is brought into contact with and electrically connected to the third electrode 25. The arrangement of the conductive member 270B that ensures electric conduction between the fourth electrode 15 and the wiring portion 85B is similar to that in the ninth embodiment. In the present embodiment, the structural body 55 and the cover member 60 may be flexible. In this case, pressure is applied from the outside or the internal pressure is reduced to ensure a pressurizing force acting upon the conductive member 70.

In the photoelectric conversion element 201H of the present embodiment, the conductive member 270A is also electrically connected to the third electrode 25 of the structural body 55 and therefore current collection can be conveniently performed from the third electrode 25. In particular, since no soldering or the like is required, the structural body 55 can be prevented from damage caused by the heat generated during soldering, and the degradation of the photoelectric conversion characteristic can be prevented. Further, in the contact portion α1 of the conductive member 270A and the third electrode 25, contact is ensured by inducing plastic deformation and breaking through the passivation layer formed on the third electrode 25. Therefore, the electric resistance can be reduced.

In the photoelectric conversion element 201H in accordance with the present invention, it is possible to provide a wiring 90 and a protective layer 91 on the transparent conductive film 12 of the fourth electrode 15, form a contact portion by bringing the wiring 90 into contact with the conductive member 70, form a contact portion, and collect current from the fourth electrode 15, in the same manner as in the photoelectric conversion element 201B of the tenth embodiment. Further, similarly to the photoelectric conversion element 201G of the fifteenth embodiment, it is also possible to connect electrically a plurality of the structural bodies 55 via the conductive member 70C. Further, by combining these features, similarly to photoelectric conversion elements in the twelfth to fifteenth embodiments, it is possible to perform current collection from the third electrode 25 and the fourth electrode 15 by using the conductive members 270A, 270B, connect electrically a plurality of structural bodies 55 to each other, and perform current collection from the third electrode 25 and the fourth electrode 15 together or from the third electrode 25 and the fourth electrode 15 individually.

The first to sixteenth embodiments of the present invention are described above, but the present invention is not limited to the above-described first to sixteenth embodiments.

For example, in the first to sixteenth embodiments, the second electrode 20 is constituted by a variety of metal substrates that can have a passivation surface, but the second electrode 20 is not limited to such a metal substrate in which a passivation layer can be formed on the surface, and may be, for example, a metal substrate having resistance to electrolyte solutions including iodine redox couples, such as Pt.

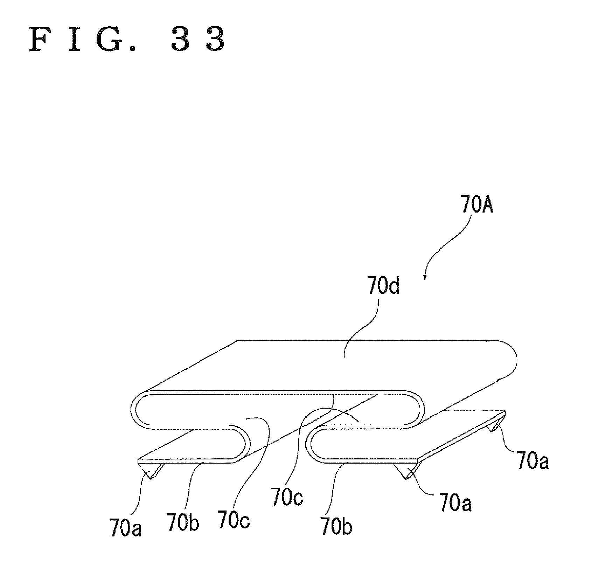

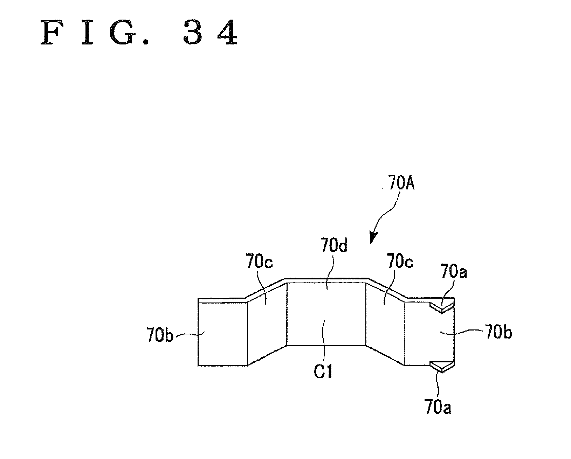

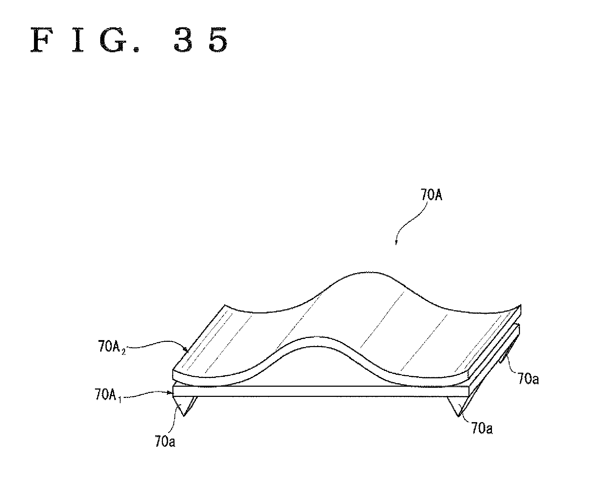

Further, the elastically deformable conductive member used in the third embodiment is not limited to those shown in FIGS. 9 to 13 and, for example, the conductive members shown in FIGS. 33 to 35 can be used. More specifically, the conductive member 70A shown in FIG. 33 is obtained by folding two connection portions 70c of the conductive member 70A shown in FIG. 9 and disposing the two second surfaces 70b below the top surface 70d. The conductive member 70A shown in FIG. 34 is obtained by providing the protruding connection sites 70a only on one second surface 70b from among the two second surfaces 70b. The conductive member 70A shown in FIG. 35 is constituted by a flat first conductive member $70A_1$ having a plurality of protruding connection sites 70a and a wavy second conductive member $70A_2$ provided on the surface of the first conductive member $70A_1$ that is on the side opposite that of the connection sites 70a. In the conductive member 70A shown in FIG. 35, the second conductive member $70A_2$ functions as a plate spring and therefore the conductive member 70A as a whole can be elastically deformed.

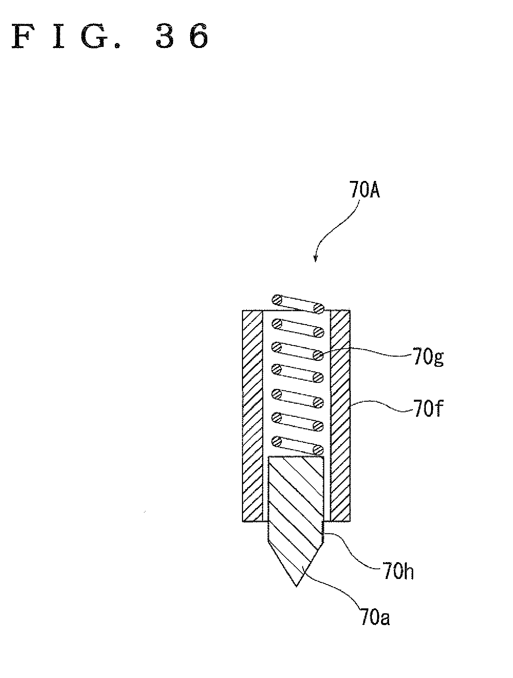

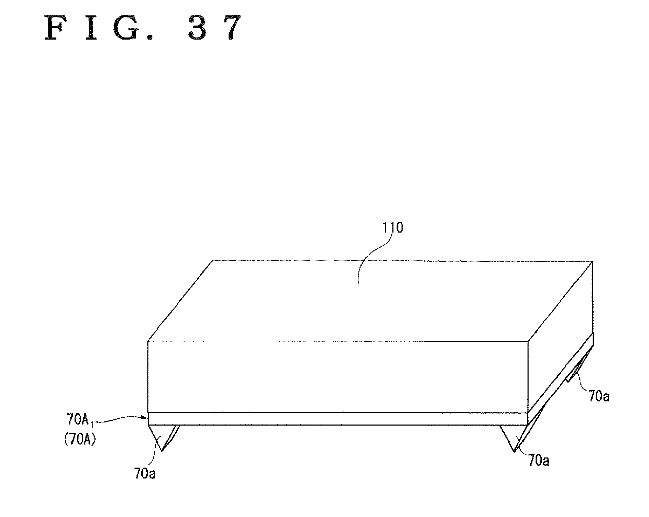

The conductive member for use in the third embodiment may be such as shown in FIGS. 36 and 37. In the conductive member 70A shown in FIG. 36 a needle-shaped member 70h having a protruding connection site 70a at the distal end along the extending direction of the sleeve 70f and a coil spring 70g are accommodated inside the sleeve 70f. The conductive member 70A shown in FIG. 37 is constituted by the first conductive member $70A_1$ shown in FIG. 35. An elastically deformable insulating body 110 is provided on the first conductive member $70A_1$, and this insulating body 110 is disposed between the conductive member 70A and the cover member 60. In this case, although the conductive member 70A is not by itself elastically deformable, elastic deformation thereof is enabled by the conductive member 70A and the insulating body 110, and the conductive member functions in the same manner as in the case in which the conductive member 70A is by itself elastically deformable. The insulating body 110 is constituted by a rubber having cushioning ability.

EXAMPLES

The contents of the present invention will be described below more specifically on the basis of examples thereof, but the present invention is not limited to the following examples.

Example 1

In the present example, a photoelectric conversion element corresponding to the third embodiment (FIG. 8) was fabricated.

(Fabrication of the First Electrode 10)

A 10-cm square transparent conductive glass (A110U80R, manufactured by Asahi Glass Co., Ltd.) was washed, a silver paste was printed on the surface of the transparent conductive glass, and the paste was fired to obtain a wiring. Then, a paste (Ti-nanoxideT/sp, manufactured by Solaronix) for forming a titanium oxide porous film was printed on the surface of the transparent conductive glass and fired to fabricate a porous titanium oxide film. A paste was then produced by using titanium oxide particles with a primary particle size of 200 nm, a solvent, and a thickening agent, and the paste was printed and fired on the porous titanium oxide film to fabricate an optical confinement film. A wiring protective film composed of low-melting glass was then formed on the wiring.

The above-described wiring, porous titanium oxide, optical confinement film, and wiring protection film were formed to obtain a 9-cm square power-generating region in the center of the transparent conductive glass.

A solution was then prepared by dissolving a dye (Ruthenium 535, manufactured by Solaronix) in dehydrated ethanol to a concentration of 0.3 mM, and the above-described configuration was immersed into the solution overnight to support the dye on the porous titanium oxide electrode and produce the first electrode 10.

(Fabrication of the Second Electrode 20)

A 9-cm square titanium foil with a thickness of 40 $\mu$m was washed and a platinum film with a thickness of several tens of nanometers was grown by a sputtering method on the titanium foil to produce the second electrode 20.

(Assembling)

An electrolytic solution was coated on the transparent conductive glass side of the first electrode 10, the glass was aligned with the titanium foil of the second electrode 20, the circumferential portions of an about 5 mm size were pasted together with an UV-curable resin to obtain a bag-like shape, and the structural body 50 was produced. In this case, the first electrode 10 and the second electrode 20 were sufficiently pressurized to reduce as much as possible the amount of the electrolytic solution remained therein.

A beryllium copper member having four legs as connection sites was fabricated as the conductive member 170A. The legs were machined with the excimer laser to have a sharp protruding shape. The legs had a triangular plate shape and the following dimensions: thickness 0.8 mm, height 2 mm, apex angle 30°.

The conductive member 170A as a whole had a plate spring shape, and the conductive member 170A that demonstrated a plastic deformation under a pressure of 10 N, that is, deformed elastically under 0-10 N was used. Wirings were electrically connected to the conductive member 170A by soldering.

An aluminum alloy plate (the concave bottom surface had a square shape with a size of about 10 cm) with a concave portion with a depth of 3 mm formed on the inside of the outer circumferential region was used as the cover member 60. A through hole with a diameter of 3 mm was formed in the bottom surface of the concave portion of the cover member 60. An insulating two-side tape was attached in the center of the bottom surface of the cover member 60, and the conductive member 170A was attached to and set on the two-side tape. In this case, the take-out wiring electrically connected to the conductive member 170A was pulled out to the outside via the through hole of the cover member. Packaging and wiring were then performed by attaching the cover member 60 onto the first electrode 10 of the structural body 50 via a gasket. A photoelectric conversion element was thus obtained.

Example 2

In the present example, a photoelectric conversion element corresponding to the sixth embodiment shown in FIG. 17 was fabricated.

More specifically, a photoelectric conversion element was fabricated in the same manner as in Example 1, except that a drying agent was provided on the inside of the cover member.

Example 3

In the present example, a photoelectric conversion element corresponding to the fourth embodiment shown in FIG. 15 was fabricated.

More specifically, a photoelectric conversion element was fabricated in the same manner as in Example 2, except that a blunted connection site that was a tip of the conductive member of Example 1 (conductive member 70A), that is, the connection site that has not been provided with a protruding shape and had a flat surface, was used as the connection portion of the second electrode and the take-out wiring of the cover member, that is, as the conductive member.

Comparative Example 1

A photoelectric conversion element was fabricated in the same manner as in Example 2, except that the second electrode and the take-out wiring of the cover member were connected by soldering and a titanium foil coated with copper to a thickness of several tens of nanometers by sputtering was used as the second electrode.

Example 4

A photoelectric conversion element was fabricated in the same manner as in Comparative Example 1, except that a silver printed circuit was formed by screen printing on the second electrode, and this silver printed circuit and the take-out wiring of the cover member were electrically connected by a silver paste.

Example 5

A photoelectric conversion element was fabricated in the same manner as in Comparative Example 1, except that a sputtered copper film with a thickness of 300 mm was formed on the surface of the second electrode that faced the cover member, a copper foil with a thickness of 35 $\mu$m was attached to one surface of a fluororubber sponge in the form of a 20 mm x 20 mm x 5 mm rectangular parallelepiped, and the component obtained was inserted between the second electrode and the cover member so that the sputtered copper film was in contact with the copper foil.

The configurations of Examples 1 to 5 and Comparative Example 1 fabricated in the above-described manner are presented in Table 1.

[Table 1]

|  | Example 1 | Example 2 | Example 3 |
|---|---|---|---|
| Embodiment | Third embodiment | Sixth embodiment | Fourth embodiment |
| Figure | FIG. 8 | FIG. 17 | FIG. 15 |

(continued)

|  | Example 1 | Example 2 | Example 3 |
|---|---|---|---|
| First electrode | Transparent conductive glass, porous titanium oxide film, Ruthenium | Transparent conductive glass, porous titanium oxide film, Ruthenium | Transparent conductive glass, porous titanium oxide film, Ruthenium |
| Second electrode | Titanium foil | Titanium foil | Titanium foil |
| Second electrode treatment | Sputtering of platinum film | Sputtering of platinum film | Sputtering of platinum film |
| Connection portion formation method | Sharp tip, conductive member | Sharp tip, conductive member | Blunt tip, conductive member |
| Cover member | Aluminum, box-like shape | Aluminum, box-like shape | Aluminum, box-like shape |
| Drying agent | No | Yes | Yes |
|  |  |  |  |
|  | Comparative Example 1 | Example 4 | Example 5 |
| Embodiment | - | - | - |
| Figure | - | - | - |
| First electrode | Transparent conductive glass, porous titanium oxide film, Ruthenium | Transparent conductive glass, porous titanium oxide film, Ruthenium | Transparent conductive glass, porous titanium oxide film, Ruthenium |
| Second electrode | Titanium foil | Titanium foil | Titanium foil |
| Second electrode treatment | Sputtering of copper film | Sputtering of copper film | Sputtering of copper film |
| Connection portion formation method | Soldering | Silver printed circuit is formed | Copper foil + cushion pressurization |
| Cover member | Aluminum, box-like shape | Aluminum, box-like shape | Aluminum, box-like shape |
| Drying agent | Yes | Yes | Yes |

In the photoelectric conversion elements fabricated in Examples 1 to 5 and Comparative Example 1, the initial electric resistance of the contact portion $\alpha1$ of the conductive member 170A and the second electrode 20, that is, the initial value of the take-out resistance was measured between a center (C1 in FIG. 9) of the surface where the conductive member 170A is in contact with the cover member 60 and one end (C2 in FIG. 8) of the second electrode 20. The results are shown in Table 2.

[Table 2]

|  | Initial resistance value ($\Omega$) |
|---|---|
| Example 1 | 0.05 |
| Example 2 | 0.05 |
| Example 3 | 0.22 |
| Example 4 | 1.07 |
| Example 5 | 0.86 |
| Comparative Example 1 | 0.04 |

A resistance value after storing for 500 h at 85°C and 85% RH was measured with respect to the photoelectric conversion elements of Examples 1 to 5 and Comparative Example 1 and a contact resistance increase ratio was calculated. Observations were also conducted with respect to the short circuit and external appearance abnormalities of the photoelectric conversion elements (cells). The results are shown in Table 3.

When the initial contact resistance value was denoted by $R_0$ and the resistance value after storing for 500 h was denoted by R, the contact resistance increase ratio was calculated by the following formula:

$$\text{Contact resistance increase ratio} = (R_0 - R)/R_0.$$

As for the short circuiting and external appearance abnormalities of the cells, a symbol "A" was used to represent the photoelectric conversion elements in which both were normal and a symbol "B" was used to represent the photoelectric conversion elements in which at least one of the abnormalities has occurred.

[Table 3]

|  | Contact resistance increase ratio (%) | Short circuiting and external appearance abnormalities of the cells |
|---|---|---|
| Example 1 | 38 | A |
| Example 2 | 0 | A |
| Example 3 | 11 | A |
| Example 4 | -1 | A |
| Example 5 | 6 | A |
| Comparative Example 1 | 0 | B (discoloration) |

Table 3 indicates that short circuiting and external appearance abnormalities of the cells were observed in none of the photoelectric conversion elements of Examples 1 to 5. By contrast, cell discoloration was observed in the photoelectric conversion element of Comparative Example 1. Therefore it can be supposed that in the photoelectric conversion elements of Examples 1 to 5, no obstacles have appeared in the porous semiconductor layer and the photoelectric conversion efficiency has not decreased. By contrast, in the photoelectric conversion element of Comparative Example 1, an obstacle has appeared in the porous semiconductor layer under the effect of heat and the photoelectric conversion efficiency has decreased.

In Example 1 in which no drying agent was provided, the resistance value increased by 38%, but this value was just about 0.07 Ω and sufficiently low.

In Examples 2 to 5 and Comparative Example 1, even when the photoelectric conversion elements were stored for 500 h at 85°C and 85% RH, the resistance value thereof has not changed or was sufficiently low.

As described hereinabove, in the photoelectric conversion element in accordance with the present invention, current collection can be conveniently and efficiently performed without degrading the photoelectric conversion characteristic. Further, by disposing a drying agent in the cover member, it is possible to obtain excellent resistance to environment. By providing a site with a sharp protruding shape that comes into contact with the electrode of the conductive member 70, it is possible to reduce the resistance value.

Example 6

In the present example, a photoelectric conversion element (FIG. 24) corresponding to the tenth embodiment was fabricated.

(Assembling)

A structural body was obtained in the same manner as in Example 1. In this case, the first electrode 10 and the second electrode 20 were sufficiently pressurized to reduce as much as possible the amount of the electrolytic solution remained therein.

A conductive member made from beryllium copper and having four first connection sites 70a composed of protruding portions and one second connection site 70e composed of a protruding portion was used as the conductive member 270A. The protruding portions were machined in the same manner as in Example 1.

The conductive member 270A as a whole had a plate spring shape and demonstrated a plastic deformation under a pressure of 10 N, that is, deformed elastically under 0-10 N.

The conductive member 270B was fabricated in the same manner as the conductive member 270A, except the protruding portions were not formed on each of the two second surfaces and one second surface from among the two second surfaces was perpendicular to the top surface.

The conductive member 270B as a whole had a plate spring shape and demonstrated a plastic deformation under a pressure of 10 N, that is, deformed elastically under 0-10 N.

An aluminum alloy plate (the concave bottom surface had a square shape with a size of about 10 cm) with a concave portion with a depth of 3 mm formed on the inside of the outer circumferential region, as shown in FIG. 24, was used as the cover member 60. A paste for forming a printed wiring portion was then coated by a screen printing method on the bottom surface of the concave portion of the cover member 60 and dried. Two wiring portions were thus formed separately from each other on the bottom surface of the concave portion of the cover member 60. Two through holes with a diameter of 3 mm were thereafter formed by drilling in the cover member 60 and the wiring portions, and a through connector 86 made from copper, having a diameter of 2.5 mm and a length of 5 mm, and functioning as a external wiring was then inserted into each of the through holes.

A two-side insulating tape was then attached to the bottom surface of the concave portion of the cover member 60, and the conductive members 270A and 270B were then attached to the two-side tape and prefixed.

The second electrode was then covered with the cover member 60. In this case, in the conductive member 270A, the first connection site was brought into contact with the second electrode. In the conductive member 270B, one of the two second surfaces was placed on the second electrode, with an insulator being interposed therebetween, and the other second surface was placed to be in contact with the first electrode. The second connection site 70e of the conductive member 270A was brought into contact with the wiring portion 85A, and the second connection site 70e of the conductive member 270B was brought into contact with the wiring portion 85B. The outer circumferential portion of the first electrode of the structural body and the outer circumferential portion of the cover member 60 were then stacked, and the stacking zone was sealed with a gasket. As a result, the first electrode and the through connector 86B were electrically connected, the second electrode 20 and the through connector 96A were electrically connected, packaging and wiring were performed, and a photoelectric conversion element was obtained.

Example 7

In the present example, a photoelectric conversion element (FIG. 25) corresponding to the eleventh embodiment was fabricated.

More specifically, a photoelectric conversion element was fabricated in the same manner as in Example 6, except that the external take-out locations of the wiring portions 85A, 85B were at the flank 85a of the cover portion. Thus, the photoelectric conversion element was fabricated in the same manner as in Example 6, except that wiring portions 85A, 85B were printed wiring portions formed from the inner surface to the outer surface of the cover member 60 in the region from the separation portion 80 side to the outer surface.

Example 8

In the present example, a photoelectric conversion element (FIG. 26) corresponding to the twelfth embodiment was fabricated.

More specifically, a photoelectric conversion element was fabricated in the same manner as in Example 6, except that the wiring portion was an etching wiring composed of copper, this wiring portion was provided at a flexible printed circuit board (FPC) 89 having gas barrier properties, the FPC 89 was connected to an external take-out location by a lead wire 102, and an ABS resin was used for the cover member 60.

Example 9

In the present example, a photoelectric conversion element (FIG. 27) corresponding to the thirteenth embodiment was fabricated.

More specifically, a photoelectric conversion element was fabricated in the same manner as in Example 8, except that the external take-out location of the flexible printed circuit board 89 was at the flank of the cover member and the cover member was made from an aluminum alloy in the same manner as in Example 6.

Example 10

In the present example, a photoelectric conversion element (FIG. 30) corresponding to the fourteenth embodiment was fabricated.

More specifically, a photoelectric conversion element was fabricated in the same manner as in Example 8, except that a configuration was used in which the FPC 89 was by itself passed through a through hole 108 of the cover member 60 serving as an external take-out location and was extended to the outside.

Table 4 illustrates configurations of Examples 6 to 10 fabricated in the above-described manner.
[Table 4]

|  | Example 6 | Example 7 | Example 8 | Example 9 | Example 10 |
|---|---|---|---|---|---|
| Embodiment | Tenth embodiment | Eleventh embodiment | Twelfth embodiment | Thirteenth embodiment | Fourteenth embodiment |
| Figure | FIG. 24 | FIG. 25 | FIG. 26 | FIG. 27 | FIG. 30 |
| Wiring portion | Silver printed wiring | Silver printed wiring | Copper etching wiring | Copper etching wiring | Copper etching wiring |
| Wiring location | Inner surface of cover member | Inner surface of cover member | FPC (gas barrier properties) | FPC | FPC (gas barrier properties) |
| External take-out location | Through hole of cover member | Flank hole of cover member | Through hole of cover member | Flank of cover member | Through hole of cover member |
| Conductive member and fixing-connecting method | Pressurization only (conductive member has the shape shown in FIG. 1) | Pressurization only (conductive member has the shape shown in FIG. 1) | Pressurization only (conductive member has the shape shown in PIG. 1) | Pressurization only (conductive member has the shape shown in FIG. 1) | Pressurization only (conductive member has the shape shown in FIG. 1) |
| Material of cover member | Aluminum alloy (surface with alumite insulation) | Aluminum alloy (surface with alumite insulation) | ABS | Aluminum alloy | Perforated ABS |

The "take-out resistance ($\Omega$)" was measured in the same manner as in Example 1 with respect to the photoelectric conversion elements of Examples 6 to 10.
The "take-out resistance" as referred to herein is a resistance occurring between the second electrode 20, which is in contact with the conductive member 70A, and the wiring portion 85, more specifically the resistance measured between the second electrode 20 and the portions of the wiring portion 85 projecting from the cover member 60 to the outside of the photoelectric conversion element. The results are shown in Table 5.

[Table 5]

|  | Take-out resistance ($\Omega$) |
|---|---|
| Example 6 | 0.07 |
| Example 7 | 0.06 |
| Example 8 | 0.06 |
| Example 9 | 0.06 |
| Example 10 | 0.06 |

A contact resistance increase rate was calculated with respect to the photoelectric conversion elements of Examples 6 to 10 in the same manner as in Example 1. Observations were also conducted with respect to short circuiting and external appearance abnormalities of the photoelectric conversion elements (cells). The results are shown in Table 6.

[Table 6]

|  | Contact resistance increase ratio (%) | Short circuiting and external appearance abnormalities of the cells |
|---|---|---|
| Example 6 | 1 | A |
| Example 7 | 0 | A |
| Example 8 | 1 | A |

(continued)

| | Contact resistance increase ratio (%) | Short circuiting and external appearance abnormalities of the cells |
|---|---|---|
| Example 9 | 1 | A |
| Example 10 | 1 | A |

Table 5 demonstrates that a very low resistance value of 0.06-0.07 Ω was observed with respect to all of the photoelectric conversion elements fabricated in Examples 6 to 10. Therefore, it was found that the conductive members 70A, 70B in the photoelectric conversion elements in accordance with the present invention made contribution to stable power take-out from the photoelectric conversion elements to the outside. Further, according to the results shown in Table 6, short circuiting and external appearance abnormalities of the cells were observed in none of the photoelectric conversion elements of Examples 6 to 10. Therefore, it was supposed that in the photoelectric conversion elements of Examples 6 to 10, no obstacles have appeared in the porous semiconductor layer and the photoelectric conversion efficiency has not decreased.

Further, a "Moisture Penetration Test" was conducted with respect to the photoelectric conversion elements fabricated in Examples 6 to 10.

In the "Moisture Penetration Test", a wet test paper was placed into an inner space of the assembled photoelectric conversion element and the photoelectric conversion element was stored for 500 h under an environment at 80°C and 85% RH. Where the relative humidity of the wet test paper became equal to or less than 10% RH (measured under normal temperature),
the photoelectric conversion element was determined to be acceptable (A), and when the relative humidity exceeded 10% RH, the photoelectric conversion element was determined to be unacceptable (B). The results are shown in Table 7.

[Table 7]

| | Moisture Penetration Test |
|---|---|
| Example 6 | A |
| Example 7 | A |
| Example 8 | A |
| Example 9 | A |
| Example 10 | A |

From Table 7, all of the photoelectric conversion elements fabricated in Examples 6 to 10 were acceptable in the "Moisture Penetration Test". Therefore, the photoelectric conversion elements of Examples 6 to 10 were all found to excel in air tightness, regardless of the difference between the configurations thereof.

INDUSTRIAL APPLICABILITY

The present invention can be applied to wet solar cells (solar cells of a type using electrolytic solutions) such as dye-sensitized solar cells.

EXPLANATION OF REFERENCE NUMERALS

1A, 1B, 1C, 1D, 1E, 1F, 1G, 1H, 201A, 201B, 201C, 201D, 201E, 201F, 201G, 201H ... photoelectric conversion element; 10, 10A, 10a ... first electrode; 13 ... porous oxide semiconductor layer; 20, 20A, 20a ... second electrode; 30, 30A, 30a ... electrolyte; 40, 40A, 40a ... sealing resin; 50, 50A, 50a, 55 ... structural body; 60 ... cover member; 70, 70A, 70B, 70C, 170A, 170B, 270A, 270B ... conductive member; 71, 77 ... wiring; 80 ... separation portion; 81 ... drying means; 85A, 85B ... wiring portion; 86A, 86B ... first terminal; 88 ... second terminal; 89 ... second flexible printed circuit board; 92 ... conductor of flexible printed circuit board; 101 ... third terminal; 87, 100, 108 ... through hole; $\alpha 1$, $\alpha 2$ ... contact portion.

**Claims**

1.  A photoelectric conversion element, comprising:

    a structural body composed of at least a conductive first electrode provided with a porous oxide semiconductor layer supporting a sensitizing dye, a second electrode provided opposite the first electrode, and an electrolyte provided in at least part of a space between the first electrode and the second electrode;
    a cover member that covers the structural body and forms a separation portion between the cover member and the second electrode; and
    a conductive member provided in the separation portion, and having a connection site that is electrically connected to either the first electrode or the second electrode, wherein
    the conductive member is sandwiched between the cover member and the first electrode or the second electrode.

2.  The photoelectric conversion element according to claim 1, comprising the structural body in a plurality, wherein the conductive member connects electrically a first electrode of one structural body from among two mutually adjacent structural bodies to a second electrode of the other structural body, and
    the conductive member is sandwiched between the cover member and the first electrode of one of the structural bodies and sandwiched between the cover member and the second electrode of the other one of the structural bodies.

3.  The photoelectric conversion element according to claim 1, further comprising:

    a wiring portion provided at the cover member and electrically connected to the first electrode or the second electrode, wherein
    the conductive member is in contact with the wiring portion disposed between the first electrode or the second electrode and the cover member, and has
    a first connection site composed of the connection site electrically connected to the first electrode or the second electrode, and a second connection site that is in contact with the wiring portion and has a convex shape.

4.  The photoelectric conversion element according to claim 3, wherein at least a portion of the conductive member and the wiring portion is provided inside the separation portion.

5.  The photoelectric conversion element according to claim 3 or 4, wherein
    the wiring portion is a first wiring portion provided at an inner surface of the cover member on the separation portion side, and
    a first terminal which is electrically connected at one end thereof to the printed wiring portion through the cover member and which is exposed at the other end thereof to the outside of the cover member is provided at the cover member.

6.  The photoelectric conversion element according to claim 3 or 4, wherein
    the wiring portion is a second wiring portion provided in a region from the inner surface of the cover member on the separation portion side to the outer surface of the cover member along these surfaces, and
    a second terminal electrically connected to the second printed wiring portion is provided on the outer surface side of the cover member.

7.  The photoelectric conversion element according to claim 3 or 4, wherein
    the wiring portion is a conductor portion of a first flexible printed circuit board provided in a region from the inner surface of the cover member on the separation portion side to the outer surface of the cover member along these surfaces, and
    a third terminal electrically connected to the conductor portion of the first flexible printed circuit board is provided on the outer surface side of the cover member.

8.  The photoelectric conversion element according to claim 3 or 4, wherein
    a second flexible printed circuit board is provided inside the separation portion so as to cover the conductive member and seal a space between the flexible printed circuit board and the structural body, and
    the wiring portion is a conductor portion of the second flexible printed circuit board.

9.  The photoelectric conversion element according to claim 8, wherein
    a third terminal that passes through the cover member and has one end thereof facing the inside of the separation portion and the other end thereof exposed to the outside is provided in the cover member, and the conductor portion of the second flexible printed circuit board and the third terminal are electrically connected.

10. The photoelectric conversion element according to claim 8, wherein
a through hole through which the separation portion communicates with the outside is provided in the cover member, and a portion of the second flexible printed circuit board is led to the outside via the through hole.

11. The photoelectric conversion element according to any one of claims 1 to 10, wherein the connection site has a protruding shape.

12. The photoelectric conversion element according to any one of claims 1 to 11, wherein the conductive member can be elastically deformed and disposed in a compressed state between the cover member and the second electrode.

13. The photoelectric conversion element according to any one of claims 1 to 12, wherein the first electrode or the second electrode is constituted by a metal that can form a passive state.

14. The photoelectric conversion element according to claim 13, wherein the metal includes titanium.

15. The photoelectric conversion element according to any one of claims 1 to 14, wherein drying means is provided inside the separation portion.

# F I G . 1

# F I G. 2

# F I G. 3

# F I G． 4

F I G. 5

F I G. 6

70A

70a

70a

# F I G. 7

# F I G. 8

F I G. 9

# F I G. 1 0

# F I G. 1 1

F I G. 1 2

F I G. 1 3

# F I G. 1 4

# F I G . 1 5

# F I G .  1 6

# F I G. 1 7

F I G.  1 8

# FIG. 19

# FIG. 20

# F I G. 2 1

F I G. 2 2

270A

70e

70c    70d    70c

70a                              70a

70b                              70b

70a                              70a

F I G. 2 3

FIG. 24

# F I G. 2 5

# F I G . 2 6

# F I G.  2 7

# F I G. 2 8

F I G. 2 9

FIG. 30

F I G .  3 1

F I G. 3 2

# F I G. 3 3

F I G. 3 4

# F I G .  3 5

# F I G． 3 6

70A

70g

70f

70h

70a

F I G. 3 7

# F I G. 3 8

70a

FIG. 39

70a

# F I G. 4 0

70a

FIG. 41

70a  170A  70a  20  60

<table>
<tr><td colspan="2" align="center"><b>INTERNATIONAL SEARCH REPORT</b></td><td>International application No.<br>PCT/JP2009/002260</td></tr>
</table>

A.  CLASSIFICATION OF SUBJECT MATTER
*H01M14/00(2006.01)i, H01L31/04(2006.01)i*

According to International Patent Classification (IPC) or to both national classification and IPC

B.  FIELDS SEARCHED

Minimum documentation searched (classification system followed by classification symbols)
H01M14/00, H01L31/04

Documentation searched other than minimum documentation to the extent that such documents are included in the fields searched
Jitsuyo Shinan Koho          1922-1996    Jitsuyo Shinan Toroku Koho    1996-2009
Kokai Jitsuyo Shinan Koho    1971-2009    Toroku Jitsuyo Shinan Koho    1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2003-151567 A (Matsushita Electric Industrial Co., Ltd.), 23 May, 2003 (23.05.03), Claims; Fig. 3 & US 2003/0091889 A1  & EP 1289035 A2 | 1-15 |
| A | JP 2005-71973 A (Fujikura Ltd.), 17 March, 2005 (17.03.05), Claims; Fig. 1 & US 2007/0125420 A1  & EP 1667274 A1 & WO 2005/015678 A1 | 1-15 |
| A | JP 2005-190817 A (Fujikura Ltd.), 14 July, 2005 (14.07.05), Claims; Fig. 1 (Family: none) | 1-15 |

☐  Further documents are listed in the continuation of Box C.        ☐  See patent family annex.

| | |
|---|---|
| *     Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    30 July, 2009 (30.07.09) | Date of mailing of the international search report<br>    11 August, 2009 (11.08.09) |
|---|---|
| Name and mailing address of the ISA/<br>    Japanese Patent Office | Authorized officer |
| Facsimile No. | Telephone No. |

Form PCT/ISA/210 (second sheet) (April 2007)

**EP 2 287 959 A1**

**REFERENCES CITED IN THE DESCRIPTION**

**Patent documents cited in the description**

- JP 2005346971 A